# EUROPEAN PATENT APPLICATION

(11) **EP 4 415 427 A1**
(43) Date of publication of application: **14.08.2024**
(21) Application number: 22885289.3
(22) Date of filing: 10.08.2022
(51) Int. Cl.: H04W 48/08

(54) **COMMUNICATION METHOD AND DEVICE**

(30) Priority: 26.10.2021 CN 202111247863; 24.11.2021 CN 202111404726
(71) Applicant: Huawei Technologies Co., Ltd., Shenzhen, Guangdong 518129 (CN)
(72) Inventor: KUANG, Yiru, Shenzhen, Guangdong 518129 (CN); XU, Haibo, Shenzhen, Guangdong 518129 (CN); XUE, Yifan, Shenzhen, Guangdong 518129 (CN); XUE, Lixia, Shenzhen, Guangdong 518129 (CN)
(74) Representative: Gill Jennings & Every LLP
(86) International application number: PCT/CN2022/111532
(87) International publication number: WO 2023/071389

(57) **Abstract**

This application relates to a communication method and device. A terminal device receives a first system information change indication on a WUR link, and/or determines, on the WUR link, that a cell is changed, where the first system information change indication indicates that system information is changed. The terminal device receives the system information on an NR link if the system information is changed, before establishing or restoring a connection on the NR link. If the terminal device determines that the system information is not changed, the terminal device may not need to receive the system information. For example, the terminal device may directly establish or restore the connection on the NR link when the terminal device does not need to receive the system information. It can be learned that, in this manner, a delay of establishing or restoring the connection on the NR link by the terminal device can be reduced. Because the terminal device does not need to receive the system information, power consumption of the terminal device can be reduced.

## Description

### CROSS-REFERENCE TO RELATED APPLICATIONS

This application claims priority to Chinese Patent Application No. 202111247863.5, filed with the China National Intellectual Property Administration on October 26, 2021 and entitled "COMMUNICATION METHOD, TERMINAL, AND NETWORK DEVICE", which is incorporated herein by reference in its entirety. This application claims priority to Chinese Patent Application No. 202111404726.8, filed with the China National Intellectual Property Administration on November 24, 2021 and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

To further reduce power consumption of user equipment (user equipment, UE), a separate low-power circuit may be used to receive a paging-related message. The circuit may be referred to as a wake-up circuit (wake-up receiver/radio/signal, WUR/WUS) or a low-power circuit. Therefore, the UE works on the wake-up circuit, and may specifically work on a WUR link or a WUS link. The "WUR link" and the "WUS link" are different names of a same link.

Even if the WUR link is introduced, because there is excessive system information of a cell, and the WUR link can carry limited signaling, and cannot carry all the system information, the system information is still sent only on a new radio (new radio, NR) link. If the UE works on the WUR link, after receiving a paging message used to page the UE, the UE needs to switch from the WUR link to the NR link to receive the system information, and then perform random access.

Actually, the system information is not necessarily changed. In other words, after the UE switches to the NR link, the system information may not be changed, and the UE does not need to receive the system information. However, in a current mechanism, the UE still receives the system information. This increases an access delay of the UE and increases power consumption of the UE.

### SUMMARY

Embodiments of this application provide a communication method and device, to reduce an access delay of a terminal device and reduce power consumption of the terminal device.

According to a first aspect, a first communication method is provided. The method may be performed by a terminal device, may be performed by a larger device including the terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: receiving a first system information change indication on a WUR link, and/or determining, on the WUR link, that a cell is changed, where the first system information change indication indicates that system information is changed; and receiving the system information on an NR link if the system information is changed, before establishing or restoring a connection on the NR link.

According to this embodiment of this application, the first system information change indication may be transmitted on the WUR link, and/or a change status of the cell may be indicated on the WUR link. In this case, if the terminal device receives the first system information change indication, and/or determines that the cell is changed, the terminal device may determine that the system information is changed. To be specific, the terminal device may receive the system information when determining that the system information is changed. If the terminal device determines that the system information is not changed (for example, the terminal device fails to receive the first system information change indication on the WUR link, and determines that the cell is not changed), the terminal device may not need to receive the system information. For example, the terminal device may directly establish or restore the connection on the NR link when the terminal device does not need to receive the system information. It can be learned that, in this manner, a delay of establishing or restoring the connection on the NR link by the terminal device can be reduced. Because the terminal device does not need to receive the system information, power consumption of the terminal device can be reduced.

With reference to the first aspect, in a first optional implementation of the first aspect, the receiving the system information on an NR link if the system information is changed, before establishing or restoring a connection on the NR link includes: receiving the system information on the NR link if the system information is changed, after receiving a message used to page the terminal device; or receiving the system information on the NR link if the system information is changed, after determining that communication on the NR link needs to be initiated. After receiving the first system information change indication and/or determining, on the WUR link, that the cell is changed, the terminal device may not need to immediately receive the system information. Instead, when being paged or needing to initiate communication on the NR link, the terminal device receives the system information if determining that the system information is changed. In this manner, power consumption caused by frequent receiving of the system information by the terminal device can be reduced. In addition, the system information is received before the connection on the NR link is established or restored, and received system information is the latest, so that validity of the system information can be ensured.

With reference to the first aspect or the first optional implementation of the first aspect, in a second optional implementation of the first aspect, that the first system information change indication indicates that system information is changed includes one or more of the following: The first system information change indication includes first indication information, and the first indication information indicates that the system information is changed; the first system information change indication includes second indication information, and the second indication information indicates that system information related to establishing or restoring the connection on the NR link is changed; the first system information change indication includes third indication information, and the third indication information indicates that system information related to the WUR link is changed; the first system information change indication includes fourth indication information, and the fourth indication information indicates that system information unrelated to establishing or restoring the connection on the NR link is changed; or the first system information change indication includes fifth indication information, and the fifth indication information indicates that system information unrelated to the WUR link is changed. The first system information change indication may indicate different system information, so that an access network device can flexibly select corresponding indication information based on change statuses of the different system information. For example, the first system information change indication may indicate that the system information related to establishing or restoring the connection on the NR link is changed. Such type of system information is directly related to establishing or restoring the connection on the NR link, and is explicitly indicated by the first system information change indication. In this way, the terminal device knows more about whether such type of system information needs to be received immediately, to improve a success rate of establishing or restoring the connection on the NR link by the terminal device.

With reference to the first aspect, the first optional implementation of the first aspect, or the second optional implementation of the first aspect, in a third optional implementation of the first aspect, after the receiving a first system information change indication on a WUR link, and/or determining, on the WUR link, that a cell is changed, the method further includes: setting a value of a first variable to a first value, where the first value indicates that system information change has occurred; and determining that the system information is changed includes: determining, based on the value of the first variable, that the system information change has occurred. After receiving the first system information change indication and/or determining, on the WUR link, that the cell is changed, the terminal device may not need to receive the system information immediately. However, the terminal device may set the first variable, to indicate, through the value of the first variable, that the system information change has occurred. In this way, when the terminal device needs to establish or restore the connection on the NR link, the terminal device may determine, based on the first variable, whether the system information is changed, to determine whether need to receive the system information.

According to a second aspect, a second communication method is provided. The method may be performed by a terminal device, may be performed by a larger device including the terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: receiving a first system information change indication on a WUR link, and/or determining, on the WUR link, that a cell is changed, where the first system information change indication indicates that system information is changed; and receiving the system information.

According to this embodiment of this application, the first system information change indication may be transmitted on the WUR link, and/or a change status of the cell may be indicated on the WUR link. In this case, if the terminal device receives the first system information change indication, and/or determines that the cell is changed, the terminal device may immediately receive the system information. Therefore, when the terminal device needs to establish or restore a connection on an NR link, the terminal device does not need to temporarily receive the system information, but may directly establish or restore the connection on the NR link based on the received system information. In this manner, validity of system information held by the terminal device can be ensured, and an access delay of the terminal device can be reduced.

With reference to the second aspect, in a first optional implementation of the second aspect, that the first system information change indication indicates that system information is changed includes one or more of the following: The first system information change indication includes first indication information, and the first indication information indicates that the system information is changed; the first system information change indication includes second indication information, and the second indication information indicates that system information related to establishing or restoring the connection on the NR link is changed; the first system information change indication includes third indication information, and the third indication information indicates that system information related to the WUR link is changed; the first system information change indication includes fourth indication information, and the fourth indication information indicates that system information unrelated to establishing or restoring the connection on the NR link is changed; or the first system information change indication includes fifth indication information, and the fifth indication information indicates that system information unrelated to the WUR link is changed.

With reference to the second aspect or the first optional implementation of the second aspect, in a second optional implementation of the second aspect, the receiving the system information includes: switching to the NR link, and receiving the system information on the NR link; and receiving the system information on the WUR link. If an access network device may send the system information on the NR link, the terminal device switches to the NR link to receive the system information. Alternatively, if an access network device may send the system information on the WUR link, the terminal device needs only to receive the system information on the WUR link, and does not need to switch to the NR link. This can reduce power consumption and a delay that are caused by switching the link by the terminal device.

With reference to the second aspect, the first optional implementation of the second aspect, or the second optional implementation of the second aspect, in a third optional implementation of the second aspect, the receiving the system information on the NR link includes: receiving the system information on a receiving occasion on the NR link. If the terminal device needs to switch to the NR link to receive the system information, the terminal device may not know a time domain location at which the terminal device needs to start to receive the system information on the NR link. Therefore, in this embodiment of this application, the terminal device may receive the system information on the receiving occasion on the NR link, so that the terminal device can determine a time domain location at which the system information can be received on the NR link, to correctly receive the system information.

With reference to the third optional implementation of the second aspect, in a fourth optional implementation of the second aspect, a start time domain location of the receiving occasion is a location at which first duration after the first system information change indication is received expires; the receiving occasion is in a current system information modification period and a next system information modification period on the NR link; the receiving occasion is in a first system information modification period on the NR link, and a time domain location of the first system information modification period is determined based on time indication information received on the WUR link; or the receiving occasion is in a first system information modification period, the first system information modification period is determined based on a first correspondence, and the first correspondence is a correspondence between time information on the WUR link and time information on the NR link. The terminal device may determine the receiving occasion on the NR link in different manners. This is flexible.

With reference to any one of the second aspect, or the first optional implementation of the second aspect to the fourth optional implementation of the second aspect, in a fifth optional implementation of the second aspect, the method further includes: setting a value of a first variable to a second value, where the second value indicates that system information change has not occurred. Because the terminal device immediately receives the system information, the value of the first variable may be set to indicate that the system information change has not occurred.

For technical effects brought by some optional implementations of the second aspect, refer to the descriptions of the technical effects of the first aspect or corresponding implementations.

According to a third aspect, a third communication method is provided. The method may be performed by a terminal device, may be performed by a larger device including the terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: receiving a first system information change indication on a WUR link, and/or determining, on the WUR link, that a cell is changed, where the first system information change indication indicates that system information is changed; and receiving the system information on a receiving occasion on an NR link.

With reference to the third aspect, in a first optional implementation of the third aspect, a start time domain location of the receiving occasion is a location at which first duration after the first system information change indication is received expires; the receiving occasion is in a current system information modification period and a next system information modification period on the NR link; the receiving occasion is in a first system information modification period on the NR link, and a time domain location of the first system information modification period is determined based on time indication information received on the WUR link; or the receiving occasion is in a first system information modification period, the first system information modification period is determined based on a first correspondence, and the first correspondence is a correspondence between time information on the WUR link and time information on the NR link.

With reference to the third aspect or the first optional implementation of the third aspect, in a second optional implementation of the third aspect, that the first system information change indication indicates that first-type system information is changed includes one or more of the following: The first system information change indication includes first indication information, and the first indication information indicates that the system information is changed; the first system information change indication includes second indication information, and the second indication information indicates that system information related to network access is changed; the first system information change indication includes third indication information, and the third indication information indicates that system information related to the WUR link is changed; the first system information change indication includes fourth indication information, and the fourth indication information indicates that system information unrelated to establishing or restoring a connection on the NR link is changed; or the first system information change indication includes fifth indication information, and the fifth indication information indicates that system information unrelated to the WUR link is changed.

For technical effects brought by the third aspect or the optional implementations, refer to the descriptions of the technical effects of the first aspect or the corresponding implementations, and/or refer to the descriptions of the technical effects of the second aspect or the corresponding implementations.

According to a fourth aspect, a communication apparatus is provided. The communication apparatus may be the terminal device according to any one of the first aspect to the third aspect. The communication apparatus has a function of the foregoing terminal device. The communication apparatus is, for example, the terminal device, or a functional module in the terminal device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

In an optional implementation, the communication apparatus further includes a storage unit, and the processing unit is configured to: be coupled to the storage unit, and execute a program or instructions in the storage unit, to enable the communication apparatus to implement a function of the terminal device according to any one of the first aspect to the third aspect.

According to a fifth aspect, a computer-readable storage medium is provided. The computer-readable storage medium is configured to store a computer program or instructions. When the computer program or instructions are run, the method performed by the terminal device in the foregoing aspects is implemented.

According to a sixth aspect, a computer program product including instructions is provided. When the computer program product runs on a computer, the method according to the foregoing aspects is implemented.

According to a seventh aspect, an apparatus is provided, including one or more units configured to perform the method according to any one of embodiments of this application.

### BRIEF DESCRIPTION OF DRAWINGS

FIG. 1 is a schematic diagram of working mechanisms of a wake-up circuit and a main circuit;
FIG. 2A and FIG. 2B are schematic diagrams of two deployment scenarios according to an embodiment of this application;
FIG. 3 is a flowchart of a communication method according to an embodiment of this application;
FIG. 4 is a schematic diagram in which UE cannot determine time at which system information is received on an NR link;
FIG. 5 is a schematic diagram of an apparatus according to an embodiment of this application; and
FIG. 6 is a schematic diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following explains and describes some terms or concepts in embodiments of this application, to facilitate understanding by a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot. The terminal device may be sometimes referred to as UE, a terminal, an access station, a UE station, a remote station, a wireless communication device, a user apparatus, or the like. For ease of description, in embodiments of this application, an example in which the terminal device is UE is used for description.

In embodiments of this application, a network device may include, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) and a transmission reception point (transmission reception point, TRP) in a communication system, a base station evolved after the 3rd generation partnership project (3rd generation partnership project, 3GPP), an access node in a wireless fidelity (wireless fidelity, Wi-Fi) system, and a wireless relay node, and a wireless backhaul node. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a vehicle-to-everything (vehicle-to-everything, V2X) technology may be a road side unit (road side unit, RSU). The following uses an example in which the access network device is a base station for description. The base station may communicate with a terminal device, or may communicate with a terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

In embodiments of this application, unless otherwise specified, a quantity of nouns indicates "a singular noun or a plural noun", that is, "one or more". "At least one" means one or more, and "a plurality of' means two or more. "And/Or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof refers to any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, first indication information and second indication information may be same information, or may be different information. In addition, the names do not indicate that the two pieces of information are different in size, indicated content, sending sequence, priority, importance, or the like. In addition, numbers of steps in embodiments described in this application are merely used to distinguish between different steps, but are not used to limit a sequence of the steps. For example, S301 may be performed before S302, may be performed after S302, or may be performed simultaneously with S302.

The following briefly describes technical features in embodiments of this application.

When UE is in a radio resource control (radio resource control, RRC) idle (idle) state or an RRC inactive (inactive) state, the UE may obtain through computing, based on an ID of the UE, a paging frame (paging frame, PF) and a location of a paging occasion (paging occasion, PO) in one PF, so that the UE receives paging at the PO. Whether the UE performs the foregoing paging receiving procedure in the RRC idle state or the RRC inactive state, or performs a data receiving procedure in an RRC connected (connected) state, a same receiving module is used. In embodiments of this application, a receiver that completes these functions (or performs related steps) is referred to as a primary receiver (or referred to as a main circuit or a primary receiving module), and the UE works on the primary receiver or the main circuit, and may specifically work on a 5th generation (5th generation, 5G) NR link. The NR link may also have another name, for example, a primary link. This is not limited.

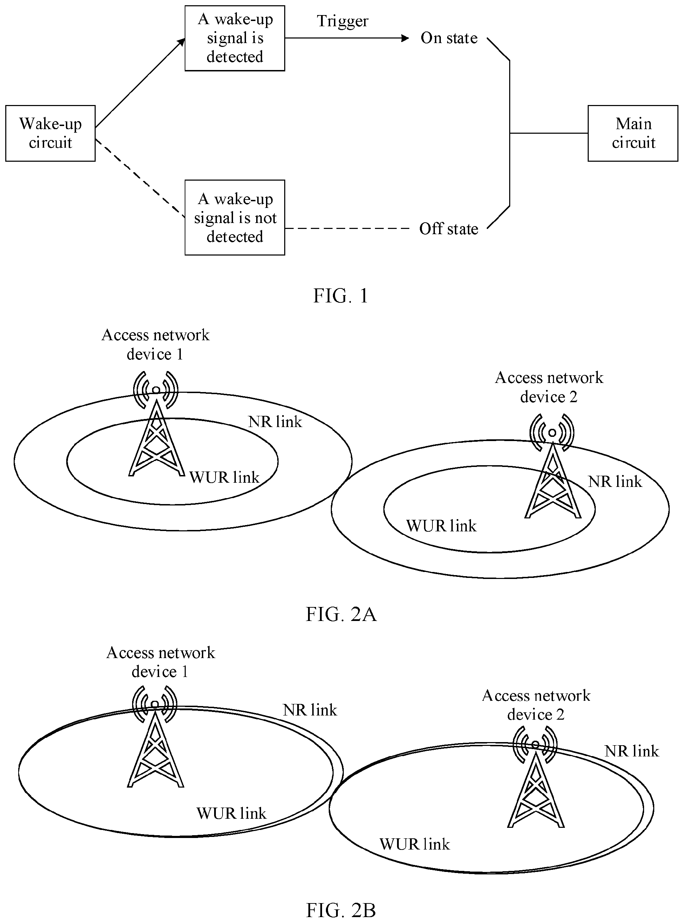

To further reduce power consumption of the UE, a separate low-power circuit may be used to receive a paging-related message. The circuit may be referred to as a wake-up circuit (WUR/WUS) or a low-power circuit. Therefore, the UE works on the wake-up circuit, and may specifically work on a WUR link or a WUS link. For example, in a low power consumption scenario, the WUR link may be introduced. The "WUR link" and the "WUS link" are different names of a same link. In this specification, the WUR link is used as an example. Alternatively, the WUR link may have another name, for example, referred to as a secondary link. The name is not limited in embodiments of this application. FIG. 1 is a schematic diagram of working mechanisms of a wake-up circuit and a main circuit. When UE works on the wake-up circuit, if a wake-up signal is detected, the UE may be triggered to turn on the main circuit. For example, the UE switches to the main circuit to work. When the UE works on the wake-up circuit, if a wake-up signal is not detected, the main circuit may be in an off state. The wake-up signal on the wake-up circuit may be a signal indicating to page one or some UEs.

UE that needs to use the WUR link is, for example, UE that has a high requirement on power consumption, for example, a smartwatch or a wearable device. This type of UE has a high requirement on a battery life, and power consumption needs to be minimized as much as possible. Therefore, the WUR link may be used. Alternatively, in addition to this type of UE, other common UE (for example, UE having a low requirement on power consumption) may also use the WUR link.

System information (system information, SI) is a function in a 5G NR system, and is a message periodically broadcast by a base station to all UEs in a cell on a broadcast channel. After the UE performs cell search and completes downlink synchronization with the cell, the UE needs to obtain system information of the cell, so that the UE can access the cell and normally work in the cell. The system information is divided into a master information block (master information block, MIB) and a plurality of system information blocks (system information blocks, SIBs). The MIB includes most basic and important information in a cell, and is information that the UE first needs to obtain when camping on the cell. The SIB includes another parameter required by the UE to camp on or work in a cell. The SIB includes, for example, a SIB 1 to a SIB 14, where the SIB 1 is basic and important information, and may include a parameter for the UE to access the cell, scheduling information of a SIB other than the SIB 1, and the like.

When the cell on which the UE camps is changed (for example, the UE performs cell reselection), or the cell on which the UE camps is not changed but system information of the cell is changed, the UE needs to obtain changed system information again, so as to work normally. When the cell on which the UE camps is changed, the UE immediately re-obtains system information of a new cell. When the cell on which the UE camps is not changed but system information of the cell is changed, the UE may obtain changed system information in a next system information modification period.

Change of the system information can occur only in specific radio frames, and these specific radio frames are also referred to as a modification period (modification period, MP). A boundary of the modification period, or a start frame location of the modification period needs to meet the following condition: SFN mod m = 0. SFN indicates a system frame number (system frame number, SFN) of the start frame location of the modification period, and m indicates the modification period, m is usually determined jointly by a modification period coefficient (modificationPeriodCoeff) parameter and a default paging cycle (defaultPagingCycle) parameter in a SIB, for example, m = modificationPeriodCoeff*defaultPagingCycle, where a value of modificationPeriodCoeff may be 2, 4, 8, or 16. To be specific, a length of the modification period is an integer multiple of the default paging cycle. The base station broadcasts the system information at an interval of an MP. In an MP, system information broadcast by the base station is the same. In different MPs, system information broadcast by the base station may be the same or different. If the UE needs to receive the system information, the UE needs only to detect the system information in the MP. If the UE does not need to receive the system information, the UE does not need to detect the system information in the MP. When the system information of the cell is changed, the UE receives, in an MP, a system information change indication from the base station. The system information change indication is carried in downlink control information (downlink control information, DCI) used to schedule a paging message. Once the UE receives the system information change indication, the UE starts to obtain new system information at a start location of a next MP, and the base station also starts to broadcast changed system information in the next MP.

Even if the WUR link is introduced, because there is excessive system information of the cell, and the WUR link can carry limited signaling, and cannot carry all the system information, the system information is still sent only on an NR link. If the UE works on the WUR link, after receiving the paging message, the UE needs to switch from the WUR link to the NR link to receive the system information, and then perform random access.

Actually, the system information is not necessarily changed. In other words, after the UE switches to the NR link, the system information may not be changed, and the UE may have obtained the unchanged system information before, and does not need to receive the system information this time. However, in a current mechanism, the UE still receives the system information. This increases an access delay of the UE and increases power consumption of the UE.

In view of this, the technical solutions in embodiments of this application are provided. In embodiments of this application, a first system information change indication may be transmitted on a WUR link, and/or a change status of a cell may be indicated on the WUR link. In this case, if a terminal device receives the first system information change indication, and/or determines that the cell is changed, the terminal device may determine that system information is changed. To be specific, the terminal device may receive the system information when determining that the system information is changed. If the terminal device determines that the system information is not changed (for example, the terminal device fails to receive the first system information change indication on the WUR link, and determines that the cell is not changed), the terminal device may not need to receive the system information. For example, the terminal device may directly establish or restore a connection on an NR link when the terminal device does not need to receive the system information. It can be learned that, in this manner, a delay of establishing or restoring the connection on the NR link by the terminal device can be reduced. Because the terminal device does not need to receive the system information, power consumption of the terminal device can be reduced.

FIG. 2A and FIG. 2B are schematic diagrams of two network architectures on which an embodiment of this application is used, or schematic diagrams of two deployment scenarios in which an embodiment of this application is used. FIG. 2A shows a deployment scenario 1, and FIG. 2B shows a deployment scenario 2.

In the deployment scenario 1, an inner circle indicates a WUR link, and an outer circle indicates an NR link. A coverage area of the WUR link is smaller than a coverage area of the NR primary link. In this case, when UE moves between different cells, the UE first leaves coverage of a WUR link of a source cell to enter coverage of an NR primary link of the source cell, moves from the coverage of the NR primary link to coverage of an NR primary link of a target cell, and may enter coverage of a WUR link of the target cell in the target cell. In this process, the UR may perform cell reselection on the NR primary link. Therefore, a current NR cell reselection manner may be used. In addition, the UE can determine, based on system information on the NR primary link, a cell in which the UE is currently located, and can also determine whether the cell is changed.

In the deployment scenario 2, an inner circle indicates a WUR link, and an outer circle indicates an NR link. A coverage area of the WUR link is basically equivalent to a coverage area of the NR primary link. In this case, when UE moves between different cells, the UE may constantly work on the WUR link. In a movement process of the UE, the UE can determine, on the WUR link, whether a cell is changed. For example, the WUR link may carry an identifier of a cell, or different cells use different WUR reference signals. The UE can determine, based on information on the WUR link, whether the cell is changed.

An access network device in FIG. 2A or FIG. 2B is, for example, a base station. The access network device corresponds to different devices in different systems. For example, the access network device may correspond to an eNB in a 4G system, and corresponds to an access network device in 5G in a 5G system, for example, a gNB. Certainly, the technical solutions provided in embodiments of this application may also be applied to a future mobile communication system. Therefore, the access network device in FIG. 2A or FIG. 2B may also correspond to a network device in the future mobile communication system. In embodiments of this application, an example in which the access network device is a base station is used. Actually, with reference to the foregoing descriptions, the access network device may alternatively be a device such as an RSU.

The technical solutions provided in embodiments of this application may be applied to a 4th generation mobile communication technology (the 4th generation, 4G) system, for example, a long term evolution (long term evolution, LTE) system, may be applied to a 5G system, for example, a new radio (new radio, NR) system, or may be further applied to a next generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to a vehicle-to-everything (vehicle-to-everything, V2X) scenario, for example, an NR-V2X scenario. For example, the technical solutions may be applied to an internet of vehicles, for example, V2X and vehicle-to-vehicle (vehicle-to-vehicle, V2V), or may be applied to a field such as intelligent driving, assisted driving, or an intelligent connected vehicle. If the technical solutions are applied to a D2D scenario, both parties of communication may be UEs. If the technical solutions are applied to a non-D2D scenario, one party of communication may be UE, and the other party is a network device (for example, an access network device or a core network device), or both parties of communication may be network devices. In the following description process, an example in which one party of communication may be UE and the other party is an access network device is used.

The following describes the technical solutions provided in embodiments of this application with reference to the accompanying drawings. It should be noted that, in the accompanying drawings corresponding to embodiments of this application, all steps indicated by dashed lines are optional steps.

Embodiments of this application relate to the UE and the access network device. In the following description process, an example in which a provided method is applied to the deployment scenario shown in FIG. 2A or FIG. 2B is used. The UE described in the following embodiments is, for example, the UE in the deployment scenario shown in FIG. 2A or FIG. 2B. The access network device described in the following embodiments is, for example, an access network device 1 or an access network device 2 in the deployment scenario shown in FIG. 2A or FIG. 2B.

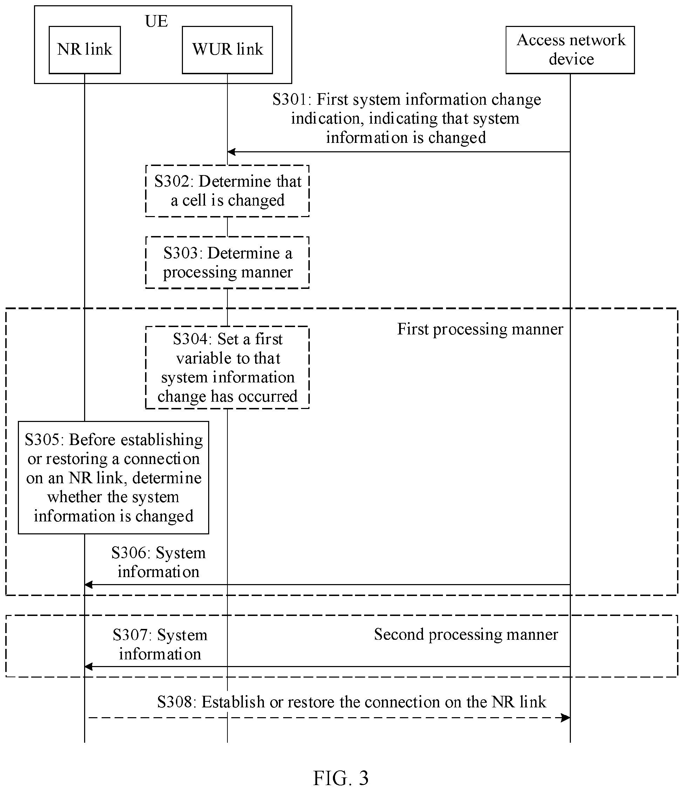

An embodiment of this application provides a communication method. FIG. 3 is a flowchart of the method.

S301: An access network device sends a first system information change indication on a WUR link. For example, if UE works on the WUR link, correspondingly, the UE receives the first system information change indication on the WUR link. The first system information change indication may indicate that system information is changed.

Optionally, the first system information change indication includes first indication information (if the first system information change indication includes only the first indication information, it may be considered that the first system information change indication and the first indication information are same information). The first indication information may indicate that the system information is changed, and the system information indicated by the first indication information includes, for example, all system information. The access network device may send the first indication information provided that any system information is changed. If the UE receives the first indication information, the UE may receive the system information before establishing or restoring a connection on an NR link, or may immediately receive the system information. For example, the UE may receive all the system information. Alternatively, the system information indicated by the first indication information is, for example, similar to a system information change indication currently sent on the NR link, and includes system information on a broadcast control channel (broadcast control channel, BCCH) other than a SIB 6, a SIB 7, and a SIB 8. The access network device may send the first indication information provided that any system information on the BCCH other than the SIB 6, the SIB 7, and the SIB 8 is changed. If the UE receives the first indication information, the UE may receive the system information before establishing or restoring a connection on an NR link, or may immediately receive the system information. For example, the UE may receive the system information other than the SIB 6, the SIB 7, and the SIB 8. In embodiments of this application, the connection on the NR link is, for example, an RRC connection between the UE and the access network device. Restoring the connection on the NR link by the UE is, for example, an RRC connection resume process. Establishing the connection on the NR link by the UE is, for example, an RRC connection establishment process or an RRC connection reestablishment process.

In a plurality of pieces of system information, some system information is related to establishing or restoring the connection on the NR link by the UE. For example, the system information includes a parameter related to establishing or restoring the connection on the NR link by the UE. Some system information is unrelated to establishing or restoring the connection on the NR link by the UE. For example, the system information does not include a parameter related to establishing or restoring the connection on the NR link by the UE. The UE usually obtains the system information before establishing or restoring the connection on the NR link. The system information is used by the UE to establish or restore the connection on the NR link. If the system information unrelated to establishing or restoring the connection on the NR link by the UE is changed, there is no impact on establishing or restoring the connection on the NR link by the UE, and it is unnecessary for the UE to obtain the system information before establishing or restoring the connection on the NR link. An extra access delay is caused by a process of obtaining the system information. In view of this problem, optionally, the first system information change indication may include second indication information and/or fourth indication information (if the first system information change indication includes only the second indication information, it may be considered that the first system information change indication and the second indication information are same information; or if the first system information change indication includes only the fourth indication information, it may be considered that the first system information change indication and the fourth indication information are same information). Alternatively, it is understood as that a system supports the second indication information and/or the fourth indication information, the second indication information may indicate that the system information related to establishing or restoring the connection on the NR link is changed, and the fourth indication information may indicate that system information unrelated to establishing or restoring the connection on the NR link is changed. For example, for the access network device, if any system information related to establishing or restoring the connection on the NR link by the UE is changed, and the first system information change indication includes the second indication information, the access network device may send the second indication information. However, if changed system information is the system information unrelated to establishing or restoring the connection on the NR link by the UE, and the first system information change indication includes the fourth indication information, the access network device may send the fourth indication information. For example, the system information related to establishing or restoring the connection on the NR link includes a MIB and a SIB 1. If the MIB and/or the SIB 1 are/is changed, the access network device may send the second indication information. If a SIB other than the MIB and the SIB 1 is changed, the access network device may send the fourth indication information. In this case, it may be understood as that the second indication information indicates that the MIB and/or the SIB 1 are/is changed, and the fourth indication information indicates that the SIB other than the MIB and the SIB 1 is changed. For another example, the parameter related to establishing or restoring the connection on the NR link by the UE includes one or more of the following: common configuration information of a serving cell (for example, including one or more of downlink (downlink, DL) configuration information, uplink (uplink, UL) configuration information, synchronization signal and physical broadcast channel block (synchronization signal and PBCH block, SSB) configuration information, or time division duplexing (time division duplexing, TDD) frame structure configuration information), configuration information of a UE timer or counter (for example, duration of a timer T300 used to control a success or a failure of a connection establishment process), or configuration information related to unified access control (unified access control, UAC). For example, the foregoing parameter is included in the SIB 1. If any one or more of the foregoing parameters are changed, the access network device may send the second indication information, or if a system parameter other than the foregoing parameter included in the system information is changed, the access network device may send the fourth indication information. In this case, it may be understood as that the second indication information indicates that any one or more of the foregoing parameters are changed, and the fourth indication information indicates that the system parameter other than the foregoing parameter is changed. If the UE receives the second indication information, the UE may receive the system information related to establishing or restoring the connection on the NR link before establishing or restoring the connection on the NR link, or may immediately receive the system information related to establishing or restoring the connection on the NR link. If the UE receives the fourth indication information, the UE may receive the system information unrelated to establishing or restoring the connection on the NR link before establishing or restoring the connection on the NR link, or immediately receive the system information unrelated to establishing or restoring the connection on the NR link. Alternatively, because the fourth indication information indicates the system information unrelated to establishing or restoring the connection on the NR link, if the UE receives the fourth indication information, the UE may not receive the system information unrelated to establishing or restoring the connection on the NR link before establishing or restoring the connection on the NR link, so as to reduce an access delay of the UE, or may not immediately receive the system information unrelated to establishing or restoring the connection on the NR link, so as to reduce power consumption of the UE. The second indication information and the fourth indication information may be implemented through same information. For example, the second indication information and the fourth indication information are separately implemented through two different values of the information. Alternatively, the second indication information and the fourth indication information may be two different pieces of information.

After the WUR link is introduced, system information related to the WUR link may be added. A quantity of pieces of system information related to the WUR is, for example, carried in an existing SIB or carried in a new SIB. The existing SIB is, for example, a SIB defined in a current protocol. The new SIB is an SIB that is not defined at present but may be introduced in the future. The system information may include one or more of the following information: a working frequency of the WUR link, a reference sequence on the WUR link or a period of a sequence, or a format used to indicate paging or other information on the WUR link. In addition, the system information may further include another parameter related to the WUR link. If the system information related to the WUR link is changed, the UE needs to obtain changed system information, so as to continue to normally work on the WUR link. Therefore, optionally, the first system information change indication may include third indication information and/or fifth indication information (if the first system information change indication includes only the third indication information, it may be considered that the first system information change indication and the third indication information are same information; or if the first system information change indication includes only the fifth indication information, it may be considered that the first system information change indication and the fifth indication information are same information). Alternatively, it is understood as that a system may support the fourth indication information and/or the fifth indication information, the third indication information may indicate that the system information related to the WUR link is changed, and the fifth indication information may indicate that system information unrelated to the WUR link is changed. For example, if the system information related to the WUR link is changed, and the first system information change indication includes the third indication information, the access network device may send the third indication information. However, if the system information unrelated to the WUR link is changed, and the first system information change indication includes the fifth indication information, the access network device may send the fifth indication information. If the UE receives the third indication information, the UE may receive the system information related to the WUR link before establishing or restoring a connection on an NR link, or may immediately receive the system information related to the WUR link. It should be noted that, to continue to normally work on the WUR link, the UE may immediately receive the system information related to the WUR link, and use changed system information related to the WUR link, so as to ensure that the UE normally works on the WUR link. If the UE receives the fifth indication information, the UE may receive the system information unrelated to the WUR link before establishing or restoring a connection on an NR link, or may immediately receive the system information related to the WUR link. Alternatively, because the fifth indication information indicates the system information unrelated to the WUR link, if the UE receives the fifth indication information, the UE may not receive the system information unrelated to the WUR link before establishing or restoring a connection on an NR link, so as to reduce an access delay of the UE, or may not immediately receive the system information related to the WUR link, so as to reduce power consumption of the UE. The fourth indication information and the fifth indication information may be implemented through same information. For example, the third indication information and the fifth indication information are separately implemented through two different values of the information. Alternatively, the third indication information and the fifth indication information may be two different pieces of information.

The first system information change indication may include one or more of the first indication information, the second indication information, the third indication information, the fourth indication information, or the fifth indication information. However, this does not mean that the five pieces of indication information are sent simultaneously. That the first system information change indication includes a type of indication information herein may be understood as that the system supports the indication information. For example, the first system information change indication includes the first indication information, the second indication information, and the third indication information. If the system information is changed at a moment, and changed system information is system information that is unrelated to establishing or restoring the connection on the NR link and that is unrelated to the WUR link, the access network device may send the first indication information. If the system information is changed at another moment, and changed system information is the system information related to establishing or restoring the connection on the NR link, the access network device may send the second indication information. If the system information is changed at still another moment, and changed system information is the system information related to the WUR link, the access network device may send the third indication information. For another example, the first system information change indication includes the second indication information and the third indication information. If the system information is changed at a moment, and changed system information is the system information that is unrelated to establishing or restoring the connection on the NR link and that is unrelated to the WUR link, the access network device does not send the indication information. If the system information is changed at another moment, and changed system information is the system information related to establishing or restoring the connection on the NR link, the access network device may send the second indication information. If the system information is changed at still another moment, and changed system information is the system information related to the WUR link, the access network device may send the third indication information. To be specific, indication information sent by the access network device, or content that is indicated by the first system information change indication sent by the access network device is related to a change status of the system information and/or a support status of the system for the indication information. For the UE, regardless of which type of the foregoing indication information is received, it is considered that the first system information change indication is received.

If the system supports one or more types of indication information, in other words, the first system information change indication includes one or more types of indication information (for example, including any one or more of the foregoing five types of indication information), the plurality of types of indication information may be different information, that is, the different information is all considered as the first system information change indication. For example, the first indication information, the second indication information, the third indication information, the fourth indication information, or the fifth indication information may occupy one field/field (for example, one bit (bit)). If the field/field is present, it indicates that the system information is changed. If the field/field is not present, it indicates that the system information is not changed, or that system information change has not occurred. Alternatively, if a value of the field/field is "1", it indicates that the system information is changed. If a value of the field/field is "0", it indicates that the system information is not changed, or indicates that system information change has not occurred. For another example, different sequences may be used for the first indication information, the second indication information, the third indication information, the fourth indication information, or the fifth indication information. If a corresponding sequence is sent or present, it indicates that the system information is changed. If a corresponding sequence is not sent or not present, it indicates that the system information is not changed, or indicates that system information change has not occurred.

If the system supports a plurality of types of indication information, in other words, the first system information change indication includes a plurality of types of indication information (for example, including any two or more types of the foregoing five types of indication information), the plurality of types of indication information may be implemented through different values of a same type of information. For example, if a value of the first system information change indication is A, it is considered as the first indication information; if a value of the first system information change indication is B, it is considered as the second indication information; if a value of the first system information change indication is C, it is considered as the third indication information; if a value of the first system information change indication is D, it is considered as the fourth indication information; and if a value of the first system information change indication is E, it is considered as the fifth indication information.

S302: The UE determines, on the WUR link, that a cell is changed.

For the deployment manner 1, the UE may perform cell reselection on the NR link. If the UE reselects a new cell, the UE may enter an NR link in the new cell, and then further enter a WUR link in the new cell. Because the UE performs cell reselection on the NR link, it can be determined that the UE has entered the new cell. Therefore, the UE can determine, on both the NR link and the WUR link of the new cell, that the cell is changed.

For the deployment manner 2, for example, the identifier of the cell is carried on the WUR link, or formats of information (for example, reference signals) sent on WUR links in different cells are different, so that the UE can identify a change status of the cell on the WUR link.

S302 is an optional step. If the deployment manner 1 is used, the UE does not perform cell reselection on the WUR link. Therefore, S302 does not need to be performed on the WUR link.

If both S301 and S302 may be performed, S301 may be performed before S302, S301 may be performed after S302, or S301 and S302 may be performed at the same time. Alternatively, only one of S301 and S302 may be performed. For example, if the access network device does not send the first system information change indication, S301 does not occur. If the cell is not changed, S302 does not occur.

If the cell is changed, the system information is changed accordingly. Therefore, if S302 occurs, it also means that the system information is changed. It can be learned that if S301 and/or S302 occur/occurs, it indicates that the system information is changed. In other words, if S301 and/or S302 occur/occurs, the UE may determine that the system information is changed.

S303: The UE determines a processing manner.

For example, the UE has two optional processing manners: a first processing manner and a second processing manner. The first processing manner is that the UE does not immediately receive the system information, but determines whether to receive the system information when needing to establish or restore the connection on the NR link. The second processing manner is that the UE immediately receives the system information. When S301 and/or S302 occur/occurs, the UE may select a processing manner. Generally, the system information is sent on the NR link, and the UE needs to switch to the NR link to receive the system information. Therefore, the power consumption of the UE is high. If the first processing manner is used, the UE does not need to frequently receive the system information, but determines whether to receive the system information before establishing or restoring the connection on the NR link. This can effectively reduce the power consumption of the UE. In addition, when establishing or restoring the connection on the NR link, the UE may determine that the system information does not need to be received, so that the access delay can be reduced. A manner in which the UE determines whether to receive the system information in the first processing manner is described below. However, if the second processing manner is used, the UE may obtain the changed system information in time, so that the UE may directly access a network without receiving the system information when establishing or restoring the connection on the NR link. Therefore, the access delay of the UE can be reduced. Therefore, the UE may select the processing manner depending on an actual situation.

Alternatively, the processing manner used by the UE may be predefined in a protocol. For example, the first processing manner is predefined in the protocol. Alternatively, the processing manner used by the UE may be configured by the access network device. For example, the access network device configures the second processing manner. Alternatively, the processing manner used by the UE may be preconfigured in the UE. For example, the first processing manner is preconfigured in the UE. If the processing manner is predefined in the protocol, is configured by the access network device, or is preconfigured in the UE, the UE does not need to determine the processing manner, but performs processing in the processing manner predefined in the protocol, configured by the access network device, or preconfigured in the UE. In other words, in this case, S303 does not need to be performed. Therefore, S303 is an optional step.

If the UE uses the first processing manner, S304 to S306 may be performed. If the UE uses the second processing manner, S307 may be performed. In other words, S304 to S306 and S307 are two parallel optional solutions. S304 to S306 correspond to the first processing manner, and S307 corresponds to the second processing manner. In one processing process, the UE performs processing in one of the processing manners.

S304: The UE sets a first variable to that the system information change has occurred.

If the UE selects the first processing manner, S304 may be performed after S303 is performed. Alternatively, if the UE does not need to select the processing manner, but the first processing manner is predefined in the protocol, configured by the access network device, or preconfigured, S304 may be performed after S301 and/or S302 are/is performed.

To be specific, if the UE uses the first processing manner, regardless of which type of indication information is included in the first system information change indication, the UE does not immediately receive the system information, but continues to work on the WUR link, but the UE may record information indicating that the system information is changed. For example, the system information corresponds to the first variable, and the first variable may indicate whether the system information is changed. When S301 and/or S302 occur/occurs, if the UE determines that the system information is changed, the UE may set the first variable to that the system information change has occurred. Subsequently, the UE can determine, based on the first variable, that the system information is changed. For example, the UE sets a value of the first variable to a first value, and the first value may indicate that the system information is changed.

Optionally, in this embodiment of this application, the first system information change indication may indicate that first-type system information is changed. In other words, the foregoing description about the system information indicated by the first system information change indication information may be replaced with the first-type system information.

For example, if the first system information change indication includes the first indication information, it may be considered that the first-type system information includes all the system information. Alternatively, it may be considered that the first system information change indication in this case does not indicate that the first-type system information is changed, but indicates that the system information is changed. In this case, the system information is not classified. Alternatively, it may be considered that the first-type system information includes the system information on the BCCH other than the SIB 6, the SIB 7, and the SIB 8.

If the first system information change indication includes the second indication information, it may be considered that the first-type system information includes the system information related to establishing or restoring the connection on the NR link by the UE. If the first-type system information includes only the system information related to establishing or restoring the connection on the NR link by the UE, the system information unrelated to establishing or restoring the connection on the NR link by the UE does not belong to the first-type system information. For example, the system information unrelated to establishing or restoring the connection on the NR link by the UE belongs to second-type system information.

If the first system information change indication includes the third indication information, it may be considered that the first-type system information includes the system information related to the WUR link. If the first-type system information includes only the system information related to the WUR link, the system information unrelated to the WUR link does not belong to the first-type system information. For example, the system information unrelated to the WUR link belongs to second-type system information.

If the first system information change indication includes the fourth indication information, it may be considered that the first-type system information includes the system information unrelated to establishing or restoring the connection on the NR link by the UE. If the first-type system information includes only the system information unrelated to establishing or restoring the connection on the NR link by the UE, the system information related to establishing or restoring the connection on the NR link by the UE does not belong to the first-type system information. For example, the system information related to establishing or restoring the connection on the NR link by the UE belongs to second-type system information.

If the first system information change indication includes the fifth indication information, it may be considered that the first-type system information includes the system information unrelated to the WUR link. If the first-type system information includes only the system information unrelated to the WUR link, the system information related to the WUR link does not belong to the first-type system information. For example, the system information related to the WUR link belongs to second-type system information.

Optionally, if the system information is classified, for example, the system information is classified into the first-type system information and the second-type system information. For content included in the first-type system information, refer to the foregoing description. In all the system information, system information other than the first-type system information may be considered as the second-type system information. For example, if the first-type system information includes the system information related to the WUR link and includes the system information related to the WUR link, the second-type system information may include the system information unrelated to the WUR link and include the system information unrelated to the WUR link.

If the first system information change indication indicates that the first-type system information is changed, the first variable may correspond to the first-type system information, and the first variable may indicate whether the first-type system information is changed. Alternatively, the first variable does not correspond to the first-type system information, but the value of the first variable may correspond to the first-type system information, and the first variable may indicate, based on the value, whether the first-type system information is changed. For example, the first variable corresponds to the first-type system information. If the value of the first variable is the first value, it indicates that the system information is changed. If the UE sets the value of the first variable to the first value, it may indicate that the first-type system information is changed. For another example, the first variable does not correspond to the first-type system information. However, if the value of the first variable is the first value, it indicates that the first-type system information is changed, that is, the first value corresponds to the first-type system information. In this case, if the UE sets the value of the first variable to the first value, it may indicate that the first-type system information is changed. For example, when S301 and/or S302 occur/occurs, if the UE determines that the first-type system information is changed, the UE may set the first variable to that the system information change has occurred (for example, set the value of the first variable to the first value). Subsequently, the UE can determine, based on the first variable, that the first-type system information is changed.

The first system information change indication may include one or more of the first indication information, the second indication information, the third indication information, the fourth indication information, or the fifth indication information. If the first variable does not correspond to the first-type system information, different indication information may correspond to a same variable, that is, the first variable. However, the value of the first variable may correspond to the first-type system information. For example, the value of the first variable is A, and indicates that the system information is changed, or indicates that the system information on the BCCH other than the SIB 6, the SIB 7, and the SIB 8 is changed, and the value A corresponds to the first indication information. The value of the first variable is B, and indicates that the system information related to establishing or restoring the connection on the NR link is changed, and the value B corresponds to the second indication information. The value of the first variable is C, and indicates that the system information related to the WUR link is changed, and the value C corresponds to the third indication information. The value of the first variable is D, and indicates that the system information unrelated to establishing or restoring the connection on the NR link is changed, and the value B corresponds to the fourth indication information. The value of the first variable is E, and indicates that the system information unrelated to the WUR link is changed, and the value E corresponds to the fifth indication information. The UE may set the value of the first variable based on received indication information.

Alternatively, if the first variable corresponds to the first-type system information, different indication information may correspond to different variables. For example, if the first system information change indication includes N pieces of indication information, the first variable may also include N subvariables (herein, the subvariable is only distinguished from the first variable; and actually, if N is 1, the subvariable is the first variable; or if N is greater than 1, it may be considered that the first variable does not exist, but N subvariables exist, and the N subvariables are actually N variables). The N subvariables one-to-one correspond to the N pieces of indication information. For example, the first system information change indication includes the first indication information, the second indication information, the third indication information, the fourth indication information, and the fifth indication information, that is, the system supports the five types of indication information. In this case, the first variable may include a first subvariable, a second subvariable, a third subvariable, a fourth subvariable, and a fifth subvariable, or the first variable may be replaced with a first subvariable, a second subvariable, a third subvariable, a fourth subvariable, and a fifth subvariable. The first subvariable corresponds to the first indication information, the second subvariable corresponds to the second indication information, the third subvariable corresponds to the third indication information, the fourth subvariable corresponds to the fourth indication information, and the fifth subvariable corresponds to the fifth indication information. If the UE receives the first indication information, the UE may set the first subvariable to that the system information change has occurred (for example, set the first subvariable to the first value), and keep the remaining four subvariables unchanged. If the UE receives the second indication information, the UE may set the second subvariable to that the system information change has occurred (for example, set the second subvariable to the first value), and keep the remaining four subvariables unchanged. If the UE receives the third indication information, the UE may set the third subvariable to that the system information change has occurred (for example, set the third subvariable to the first value), and keep the remaining four subvariables unchanged. If the UE receives the fourth indication information, the UE may set the fourth subvariable to that the system information change has occurred (for example, set the fourth subvariable to the first value), and keep the remaining four subvariables unchanged. If the UE receives the fifth indication information, the UE may set the fifth subvariable to that the system information change has occurred (for example, set the fifth subvariable to the first value), and keep the remaining four subvariables unchanged. If the indication information one-to-one corresponds to the variable, if the UE fails to receive any indication information, but determines that the cell is changed, the UE may set any subvariable to that the system information change has occurred (for example, set any subvariable to the first value), or the UE may set all subvariables supported by the system (for example, one or more of the first subvariable, the second subvariable, the third subvariable, the fourth subvariable, or the fifth subvariable) to that the system information change has occurred (for example, set all the subvariables supported by the system to the first value).

For example, the first variable (or a subvariable) may occupy one bit (bit). If a value of the bit is "1", it indicates that the system information is changed. If a value of the bit is "0", it indicates that the system information is not changed, or indicates that the system information change has not occurred.

In addition, if the UE performs cell reselection, for example, reselects another cell from the current cell, in this case, if the first variable indicates that the system information is changed, the UE may clear a record of the first variable. For example, the UE sets the first variable to indicate that the system information change has not occurred. If the first variable is actually a plurality of subvariables, the UE may set each subvariable to indicate that the system information change has not occurred. For example, the UE sets the value of the first variable to a second value, and the second value may indicate that the system information change has not occurred. If the first variable occupies one bit, the second value is, for example, "0". It should be noted that, if the first variable already indicates that the system information change has not occurred, the UE may not need to reset the first variable. For example, if the value of the first variable is already the second value, the UE does not need to set the first variable, and the first variable retains the second value.

Alternatively, the UE may record, in another manner, whether the system information is changed, and does not set a variable. Therefore, S304 is an optional step.

In the foregoing content, the first variable indicates that the system information is changed. Alternatively, in another case, if S302 occurs, the first variable may not indicate that the system information is changed, but indicate that the cell is changed. For example, if S301 occurs, the first variable may indicate that the system information is changed, and if S302 occurs, the first variable may indicate that the cell is changed. For example, if the value of the first variable is a third value, it indicates that the cell is changed. For content such as a manner for setting the first variable, refer to the foregoing description. If the cell is changed, it means that the system information is changed. Therefore, the two indication manners may be equivalent.

S305: Before establishing or restoring the connection on the NR link, the UE determines whether the system information is changed.

In other words, before establishing or restoring the connection on the NR link, the UE determines whether system information currently stored by the UE is valid. If system information that needs to be used by the UE is changed, the system information currently stored by the UE is invalid. If system information that needs to be used by the UE is not changed, the system information currently stored by the UE is valid. For example, if the UE needs to establish or restore the connection on the NR link, before establishing or restoring the connection on the NR link, the UE may determine whether the system information is changed. A determining result may be that the system information is changed, or that the system information is not changed. There may be different cases in which the UE needs to establish or restore the connection on the NR link. For example, if the UE receives a message used to page the UE, the UE needs to establish or restore the connection on the NR link. In this case, S305 may be replaced with: After receiving the message used to page the UE (or when receiving the message used to page the UE), the UE determines whether the system information is changed. Alternatively, if the UE is not paged, but the UE needs to actively initiate communication on the NR link, the UE needs to establish or restore the connection on the NR link. In this case, S305 may be replaced with: After determining that communication on the NR link needs to be initiated (or when determining that communication on the NR link needs to be initiated), the UE determines whether the system information is changed. Determining to initiate communication on the NR link may also be considered as determining to establish or restore a connection, or determining to establish or restore the connection on the NR link.

The UE may determine, on the WUR link, to establish or restore the connection on the NR link (for example, receiving paging on the WUR link, or determining, on the WUR link, to initiate communication on the NR link), the UE may switch to the NR link. On the NR link, the UE may determine whether the system information is changed, that is, the UE performs S305 on the NR link. This is used as an example in FIG. 3. Alternatively, if the UE determines, on the WUR link, to access a network, the UE may also determine, on the WUR link, whether the system information is changed, that is, the UE performs S305 on the WUR link. In this case, before performing S306 or S308, the UE needs to switch to the NR link.

Optionally, in this embodiment of this application, determining whether the system information is changed may be determining whether the first-type system information is changed. The system information included in the first-type system information is described in S304. Details are not described herein again.

If the first variable is set, the UE determines whether the system information is changed. In one determining manner, the UE determines the value of the first variable, to determine, based on the value of the first variable, whether the system information is changed. If the value of the first variable indicates that the system information is changed, the UE determines that the system information is changed; or if the value of the first variable indicates that the system information is not changed, the UE determines that the system information is not changed. If the first variable is actually a plurality of subvariables, the UE may determine a value of each subvariable one by one, to determine whether corresponding first-type system information is changed. For example, if the first variable includes the first subvariable, the second subvariable, the third subvariable, the fourth subvariable, and the fifth subvariable, the UE may determine values of the five subvariables. For example, if a value of the first subvariable indicates that the system information is changed, the UE determines that the system information is changed (for example, one or more pieces of system information in all system information may be changed, or one or more pieces of system information in system information on the BCCH other than the SIB 6, the SIB 7, and the SIB 8 may be changed); or if a value of the first subvariable indicates that the system information change has not occurred, the UE determines that the system information is not changed (for example, all system information is not changed, or the system information on the BCCH other than the SIB 6, the SIB 7, and the SIB 8 is not changed). For another example, if a value of the second subvariable indicates that the system information change has occurred, the UE determines that the system information related to establishing or restoring the connection on the NR link is changed; or if a value of the second subvariable indicates that the system information change has not occurred, the UE determines that the system information related to establishing or restoring the connection on the NR link is not changed. For still another example, if a value of the third subvariable indicates that the system information change has occurred, the UE determines that the system information related to the WUR link is changed; or if a value of the third subvariable indicates that the system information change has not occurred, the UE determines that the system information related to the WUR link is not changed. For yet another example, if a value of the fourth subvariable indicates that the system information change has occurred, the UE determines that the system information unrelated to establishing or restoring the connection on the NR link is changed; or if a value of the fourth subvariable indicates that the system information change has not occurred, the UE determines that the system information unrelated to establishing or restoring the connection on the NR link is not changed. For still yet another example, if a value of the fifth subvariable indicates that the system information change has occurred, the UE determines that the system information unrelated to the WUR link is changed; or if a value of the fifth subvariable indicates that the system information change has not occurred, the UE determines that the system information unrelated to the WUR link is not changed.

Alternatively, in S304, if S301 occurs, the first variable indicates that the system information is changed, or if S302 occurs, the first variable indicates that the cell is changed. In this case, S305 may be replaced with: Before establishing or restoring the connection on the NR link, the UE determines whether the system information is changed or whether the cell is changed. Optionally, the UE may determine, based on the value of the first variable, whether the system information is changed and whether the cell is changed.

S306: The access network device sends the system information on the NR link. Correspondingly, the UE receives the system information on the NR link. After S306 is performed, S308 may be performed.

Generally, the access network device sends the system information on the NR link by using an MP as a period. In an MP, system information sent by the access network device is the same. In different MPs, system information sent by the access network device may be the same or different. If the UE needs to receive the system information, the UE detects in the MP. If the UE does not need to receive the system information, the UE does not need to detect the system information in the MP.

If the UE determines that the system information is changed in S305, the UE may receive the system information. If the UE determines that the system information is not changed in S305, the UE may not need to perform S306, that is, the UE may not need to receive the system information. For example, the UE may directly perform S308. It should be noted that even if the UE does not perform S306, the access network device may still perform S306. In other words, the access network device may still send the system information, but the UE does not receive the system information. For example, if the UE receives the message used to page the UE, the UE needs to establish or restore the connection on the NR link. In this case, S305 and S306 may be replaced with: receiving the system information on the NR link if the system information is changed, after receiving the message used to page the UE (or when receiving the message used to page the UE). Alternatively, if the UE needs to initiate communication on the NR link, the UE needs to establish or restore the connection on the NR link. In this case, S305 and S306 may be replaced with: receiving the system information on the NR link if the system information is changed, after determining that communication on the NR link needs to be initiated (or when determining that communication on the NR link needs to be initiated). Alternatively, regardless of a reason for which the UE needs to establish or restore the connection on the NR link, S305 and S306 may be replaced with: if the system information is changed, receiving the system information on the NR link, and then establishing or restoring the connection on the NR link.

Alternatively, if the UE determines that the system information is not changed in S305, the UE may not need to receive the system information on the NR link, but may directly establish or restore the connection on the NR link. However, the access network device may still send the system information on the NR link, but the UE does not receive the system information.

Optionally, if the UE determines that the changed system information includes the system information unrelated to establishing or restoring the connection on the NR link and/or the system information unrelated to the WUR link, the UE may alternatively skip receiving the system information. In other words, S306 is not performed. For example, S308 may be directly performed.

For example, the UE determines, on the NR link, that the system information is changed, that is, the UE performs S305 on the NR link. Therefore, after S305, the UE may directly perform S306. Alternatively, the UE determines, on the WUR link, that the system information is changed, that is, the UE performs S305 on the WUR link. After S305, the UE may switch to the NR link, and then perform S306. In addition, if the UE determines, on the WUR link, that the system information is not changed, because the UE has determined to need to access the network, the UE also needs to switch to the NR link, but does not need to perform S306.

Alternatively, the system information may be sent on the WUR link. In this case, S306 may be replaced with: The access network device sends the system information on the WUR link. Correspondingly, the UE receives the system information on the WUR link. In this manner, the UE does not need to switch to the NR link. For example, the system information related to the WUR link may be sent on the NR link, or may be sent on the WUR link. If the system information related to the WUR link is sent on the WUR link, the UE may receive the system information related to the WUR link on the WUR link. There is no need to switch to the NR link, thereby reducing the power consumption caused by switching by the UE and further reducing the access delay.

If the UE determines that the system information is changed (for example, the UE determines that one or more pieces of system information in all the system information is changed, or the UE determines that one or more pieces of system information in the system information on the BCCH other than the SIB 6, the SIB 7, and the SIB 8 may be changed), the UE may receive the system information, that is, perform S306. For example, if the UE receives the first indication information, or if the UE determines, based on the first variable or the first subvariable, that the system information is changed, the UE may determine that the system information is changed. All the system information includes, for example, all system information that may be sent by the access network device, for example, the MIB and all SIBs. For example, when receiving the system information, the UE may receive all the system information, or may receive some required system information (for example, receive the system information related to establishing or restoring the connection on the NR link). If the UE determines that the system information related to establishing or restoring the connection on the NR link is changed, for example, the UE receives the second indication information, or if the UE determines, based on the first variable or the second subvariable, that the system information is changed, the UE may receive the system information, that is, perform S306. For example, when receiving the system information, the UE may receive only the system information related to establishing or restoring the connection on the NR link, but not receive other system information (for example, the system information unrelated to establishing or restoring the connection on the NR link), to reduce power consumption caused by signaling reception by the UE. Alternatively, when receiving the system information, the UE may also receive other system information (for example, the system information unrelated to establishing or restoring the connection on the NR link) in addition to the system information related to establishing or restoring the connection on the NR link, to improve implementation flexibility of the UE. If the UE determines that the system information related to the WUR link is changed, for example, the UE receives the third indication information, or if the UE determines, based on the first variable or the third subvariable, that the system information is changed, the UE may receive the system information, that is, perform S306. For example, when receiving the system information, the UE may receive only the system information related to the WUR link, but not receive other system information (for example, the system information unrelated to the WUR link), to reduce power consumption caused by signaling reception by the UE. Alternatively, when receiving the system information, the UE may also receive other system information (for example, the system information unrelated to the WUR link) in addition to the system information related to the WUR link, to improve implementation flexibility of the UE.

If the UE determines that the system information unrelated to establishing or restoring the connection on the NR link is changed, for example, the UE receives the fourth indication information, or if the UE determines, based on the first variable or the fourth subvariable, that the system information is changed, when receiving the system information, the UE may receive only the system information unrelated to establishing or restoring the connection on the NR link, but not receive other system information (for example, the system information related to establishing or restoring the connection on the NR link), to reduce power consumption caused by signaling reception by the UE; or when receiving the system information, the UE may also receive other system information (for example, the system information related to establishing or restoring the connection on the NR link) in addition to the system information unrelated to establishing or restoring the connection on the NR link, to improve implementation flexibility of the UE. Alternatively, if the UE determines that the system information unrelated to establishing or restoring the connection on the NR link is changed, the UE may not receive the system information first, that is, perform S308 instead of performing S306. For example, the UE may obtain changed system information in a process of establishing or restoring the connection on the NR link, or after establishing or restoring the connection on the NR link, to reduce the access delay of the UE.

If the UE determines that the system information unrelated to the WUR link is changed, for example, the UE receives the fifth indication information, or if the UE determines, based on the first variable or the fifth subvariable, that the system information is changed, when receiving the system information, the UE may receive only the system information unrelated to the WUR link, but not receive other system information (for example, the system information related to the WUR link), to reduce power consumption caused by signaling reception by the UE; or when receiving the system information, the UE may also receive other system information (for example, the system information related to the WUR link) in addition to the system information unrelated to the WUR link, to improve implementation flexibility of the UE. Alternatively, if the UE determines that the system information unrelated to the WUR link is changed, the UE may not receive the system information first, that is, perform S308 instead of performing S306. For example, the UE may obtain changed system information in a process of establishing or restoring the connection on the NR link, or after establishing or restoring the connection on the NR link, to reduce the access delay of the UE.

S307: The access network device sends the system information. Correspondingly, the UE receives the system information.

Generally, the access network device sends the system information on the NR link by using an MP as a period. In an MP, system information sent by the access network device is the same. In different MPs, system information sent by the access network device may be the same or different. If the UE needs to receive the system information, the UE detects in the MP. If the UE does not need to receive the system information, the UE does not need to detect the system information in the MP.

If the UE uses the second processing manner, S307 may be performed after S303 is performed. Alternatively, if the UE does not need to select the processing manner, but the second processing manner is predefined in the protocol, configured by the access network device, or preconfigured, S307 may be performed after S301 and/or S302 are/is performed.

In S307, regardless of which type of indication information is received by the UE, provided that the UE determines that the system information indicated by the received first system information change indication is changed, the UE may immediately receive the system information, or immediately receive the system information in a next system information modification period. For example, if the UE receives the third indication information, to continue to normally work on the WUR link, the UE may immediately receive the system information related to the WUR link, that is, the UE performs S307. If the UE receives the first system information change indication, it may be considered that the UE receives the system information in response to the first system information change indication. Alternatively, if the UE determines that the cell is changed, it may be considered that the UE receives the system information in response to a cell change event.

Alternatively, optionally, if the UE receives the fourth indication information and/or the fifth indication information but fails to receive other indication information, the UE may not receive the system information, that is, the UE does not perform S307. It should be noted that even if the UE does not perform S307, the access network device may still perform S307. In other words, the access network device still sends the system information, but the UE does not receive the system information.

In the second processing manner, because the UE immediately receives the system information, the first variable does not need to be set. The UE sets a variable, for example, updates a value of the variable. Therefore, if the UE does not set the first variable, for example, does not update the value of the first variable. Alternatively, if the processing manner is selected by the UE, the processing manners selected by the UE in different cases may be different. For example, the UE selects the first processing manner after receiving the first system information change indication last time, but selects the second processing manner after receiving the first system information change indication next time. If the first variable may be set in the first processing manner, the first variable also needs to be processed in the second processing manner. Otherwise, a situation indicated by the first variable may be inconsistent with an actual situation. Therefore, even if the second processing manner is used, the UE may set the first variable. For example, in the second processing manner, because the UE immediately receives the system information, the value of the first variable may be set to indicate that the system information change has not occurred. If the first variable is a plurality of subvariables, if the UE receives all the system information, the first subvariable may be set to that the system information change has not occurred. If the UE receives the system information related to establishing or restoring the connection on the NR link, the second subvariable may be set to that the system information change has not occurred. If the UE receives the system information related to the WUR link, the third subvariable may be set to that the system information change has not occurred.

In the second processing manner, if the UE determines that the system information is changed, the UE may immediately receive the system information. The access network device may send the system information on the NR link, and the UE receives the system information on the NR link. This is used as an example in FIG. 3. For example, the UE may switch to the NR link, and then receive the system information on the NR link. Alternatively, the access network device may send the system information on the WUR link. In this case, the UE may receive the system information on the WUR link without switching to the NR link.

It should be noted that, if the UE receives the third indication information, to continue to normally work on the WUR link, the UE may immediately receive the system information related to the WUR link. Optionally, the access network device may send, on the WUR link, the system information related to the WUR link. In this case, the UE may receive, on the WUR link, the system information related to the WUR link without switching to the NR link.

If the UE needs to switch to the NR link to receive the system information, the UE may face a problem that the UE may not know a time domain location at which the UE needs to start to receive the system information on the NR link. For example, after receiving the first system information change indication, the UE switches from the WUR link to the NR link, and needs to receive the system information in a next MP on the NR link. However, the UE may not maintain time information on the WUR link, or time information maintained by the UE on the WUR link is inconsistent with time information on the NR link (for example, a system frame number on the WUR link is not aligned with a system frame number on the NR link). In this case, the UE cannot determine which MP on the NR link is the next MP. If the UE incorrectly selects an MP on the NR link, system information received by the UE may be invalid system information, and the UE may not correctly work on the WUR link and/or the NR link.

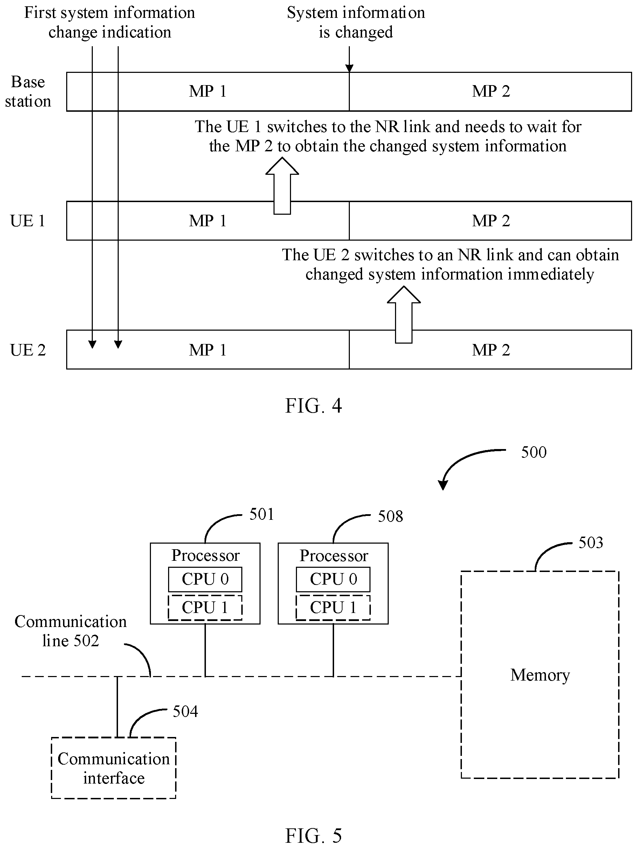

For example, refer to FIG. 4. UE 1 receives a first system information change indication at time indicated by the first vertical line arrow from left to right, and the UE 1 switches to an NR link after receiving the first system information change indication, and the switching succeeds at the time indicated by the first vertical line arrow from left to right. That is, the UE 1 successfully switches in an MP 1 in FIG. 4. UE 2 receives the first system information change indication at time indicated by the second vertical line arrow from left to right, and the UE 2 switches to the NR link after receiving the first system information change indication, and the switching succeeds at the time indicated by the second vertical line arrow from left to right. That is, UE 1 successfully switches in an MP 2 in FIG. 4. A next MP needs to be a next MP of the MP in which the first system information change indication is located. In other words, for both the UE 1 and the UE 2, a next MP on the NR link needs to be the MP 2 in FIG. 4. However, because neither the UE 1 nor the UE 2 maintains time information on a WUR link, after the two UEs switch to the NR link, only absolute time on the NR link is known. For example, the UE 1 determines that the UE 1 is in the MP 1. The UE 2 determines that the UE 2 is located in the MP 2. Neither the UE 1 nor the UE 2 knows which MP is the next MP of the MP in which the first system information change indication is located, and therefore, the UE 1 and the UE 2 do not know time from which receiving of the system information is started.

In view of this, an optional solution is provided in this embodiment of this application. The UE may determine a receiving occasion on the NR link, and the receiving occasion may be used to receive the system information. Therefore, the UE may receive the system information on the receiving occasion on the NR link. For example, the receiving occasion is referred to as a first receiving occasion. The first receiving occasion may include one or more time points. If a plurality of time points are included, the plurality of time points may be continuous or discrete. Alternatively, the first receiving occasion may include one or more durations. If a plurality of durations are included, the plurality of durations may be continuous or discrete.

In a first optional manner in which the UE determines the first receiving occasion, a start time domain location of the first receiving occasion may be when first duration after the first system information change indication is received expires, or in other words, the UE may receive the system information after first duration after the first system information change indication is received (or, when first duration expires). For example, the first duration is indicated by T, that is, the start time domain location of the first duration is time at which the UE receives the first system information change indication. For example, the time at which the UE receives the first system information change indication is indicated by n, and an end time domain location of the first duration is n+T. In this case, a moment n+T is the start time domain location of the first receiving occasion, or a moment n+T is a moment at which the UE can start to receive the system information. For example, after receiving the first system information change indication, the UE may switch to the NR link, and may wait for the first duration after the switching. When the first duration expires, the UE may receive the system information. For another example, after receiving the first system information change indication, the UE may wait for the first duration. When the first duration expires, the UE may switch to the NR link, and may immediately start receiving the system information after the switching. This makes the UE already enter an MP in which changed system information needs to be received after the UE switches to the NR link. In this manner, the UE may stay on the WUR link for more time, thereby reducing the power consumption of the UE. For example, the first duration is predefined in a protocol, is configured by the access network device, or may be preconfigured in the UE. For example, the first duration may be greater than or equal to a length of one MP on the NR link. When the first duration is greater than or equal to the length of one MP, it is equivalent that the UE translates at least one MP in time domain. After the at least one MP is translated, the access network device sends the changed system information, and the UE may receive the changed system information when receiving the system information. This improves a receiving success rate of the UE, and also reduces a probability of receiving invalid system information by the UE. Alternatively, the first duration may have another value.

In a second optional manner in which the UE determines the first receiving occasion, the first receiving occasion may be in a current MP and a next MP on the NR link. Alternatively, it is understood as that after the UE switches to the NR link, both an MP in which the UE is currently located and a next MP on the NR link may be included in the first receiving occasion. Alternatively, it is understood as that after the UE switches to the NR link, the UE may receive the system information in both the MP in which the UE is currently located and the next MP on the NR link. Generally, after the UE switches to the NR link, an MP in which changed system information needs to be received may be the current MP or the next MP. Because the UE may not be able to determine which MP is the MP, the UE may receive the system information in both MPs. For example, if system information received by the UE in the two MPs is consistent, it indicates that the current MP is the MP in which the changed system information needs to be received, and the system information received by the UE is the changed system information. However, if system information received by the UE in the two MPs is inconsistent, it indicates that the next MP of the current MP is the MP in which the changed system information needs to be received, the system information received in the current MP is the system information before the change, and the system information received in the next MP is the changed system information. The UE may use the changed system information, and the UE may store or discard the system information before the change. In this manner, the UE receives the system information in both MPs, thereby improving receiving reliability and enabling the UE to obtain the changed system information.

Optionally, in the second optional manner, determining logic may be further added. To be specific, after the UE switches to the NR link, if it is determined that all POs in the MP in which the UE is currently located on the NR link have been missed (that is, all POs in the current MP have expired), the UE may receive the system information in both the MP in which the UE is currently located and the next MP on the NR link. If there is still a PO at which monitoring may be performed in the MP in which the UE is currently located on the NR link, the UE may monitor at the PO, so as to determine an MP in which the system information needs to be received, and then receive the system information in the MP. The access network device may also send the system information change indication at a PO on the NR link. For example, the access network device sends a first system information change indication. If the UE monitors at the PO on the NR link, the UE may also receive the first system information change indication. In this case, the UE can determine, based on the first system information change indication received on the NR link, an MP in which the system information needs to be received. Therefore, in this case, the UE needs only to determine, based on the first system information change indication received on the NR link, the MP in which the system information is received, and does not need to receive the system information in both MPs, to reduce invalid system information received by the UE. Alternatively, if the access network device sends the first system information change indication on the WUR link, the access network device no longer sends the first system information change indication on the NR link, or if the UE monitors the system information change indication on the WUR link, the UE does not monitor at the PO on the NR link. In these cases, the UE may not need to determine whether the PO in the MP in which the UE is currently located on the NR link has been missed, but after switching to the NR link, the UE receives the system information in both the MP in which the UE is currently located and the next MP on the NR link.

In a third optional manner in which the UE determines the first receiving occasion, the first receiving occasion is in a first MP on the NR link, or the UE receives the system information in a first MP on the NR link. The first MP is determined based on time indication information received on the WUR link, and the time indication information indicates a time domain location of the first MP. In other words, the access network device may send the time indication information on the WUR link. For example, the time indication information may be sent together with the first system information change indication, the time indication information may be included in the first system information change indication, or the time indication information and the first system information change indication may be two pieces of information. The time indication information may indicate the time domain location of the first MP, and the first MP is start time at which the system information is changed, that is, an MP in which changed system information needs to be received. In this case, the UE can determine the first MP based on the time indication information after switching to the NR link, to receive the system information in the first MP. Alternatively, after switching to the NR link, the UE starts to receive the system information at the time domain location indicated by the time indication information, and does not need to determine the first MP. In other words, the UE needs only to receive the system information at the time domain location indicated by the time indication information, and does not need to determine that the time indication information indicates the first MP.

The time indication information may indicate the time domain location of the first MP in different indication manners. For example, in an indication manner, the time indication information may indicate a start system frame number (system frame number, SFN) of the first MP. For example, the SFN occupies 10 bits. The UE learns of the start SFN of the first MP, and determines the time domain location of the first MP. For another example, in another indication manner, the time indication information may indicate a sequence number of the first MP. For example, if a length of an MP is 64 system frames (system frames), there may be a maximum of 16 MPs in 1024 system frames. In this case, the time indication information may indicate which MP in the 16 MPs is the first MP, that is, indicate a sequence number of the first MP in the 16 MPs, so that the UE can determine the time domain location of the first MP based on the sequence number of the first MP. For still another example, in still another indication manner, the time indication information may indicate that a sequence number of the first MP is an odd number or an even number. After the UE switches to the NR link, generally, an MP in which changed first-type system information needs to be received is an MP in which the UE is currently located or a next MP, and the two MPs are continuous MPs. Therefore, a sequence number of one of the two MPs is an odd number, and a sequence number of the other MP is an even number. Therefore, the time indication information indicates that the sequence number of the first MP is the odd number or the even number, so that the UE can determine which MP is the first MP, that is, determine the time domain location of the first MP.

In a fourth optional manner in which the UE determines the first receiving occasion, the first receiving occasion is in a first MP, or the UE receives the system information in a first MP on the NR link. The first MP is determined based on a first correspondence, and the first correspondence is a correspondence between time information on the WUR link and time information on the NR link. To be specific, the UE may maintain a correspondence (namely, the first correspondence) between time on the WUR link and time on the NR link. If the UE receives the first system information change indication on the WUR link, the UE may determine first time. The first time uses a time line on the WUR link as a reference, and is time at which the UE receives the first system information change indication on the WUR link. The UE may determine a time domain location of the next MP on the NR link based on the first time and the first correspondence. The MP is the first MP. Alternatively, the UE may determine a time domain location on the NR link based on the first time and the first correspondence, to start receiving the system information at the time domain location, and does not need to determine that the time domain location is the time domain location of the first MP.

In addition to the foregoing several manners, the UE may determine the first receiving occasion in another manner. This is not specifically limited.

If the UE switches to the NR link to receive the system information, if the UE needs to establish or restore the connection on the NR link at this time (for example, the UE is paged, and/or the UE needs to initiate communication on the NR link), the UE may establish or restore the connection on the NR link. For example, the UE may initiate a random access procedure. In this case, if the UE does not need to establish or restore the connection on the NR link (for example, the UE is not paged, and the UE does not need to initiate communication on the NR link), after receiving the first-type system information, the UE may switch back to the WUR link to work, so as to reduce power consumption. If the UE returns to the WUR link to work, when the UE needs to establish or restore the connection on the NR link, for example, the UE is paged, and/or the UE needs to initiate communication on the NR link, the UE may switch to the NR link again, for example, the UE may perform S305.

In the second processing manner, the foregoing describes the case in which the UE switches to the NR link to receive the system information. However, it is also described above that the access network device may also send the system information on the WUR link, and the UE may receive the system information on the WUR link without switching to the NR link. If the UE receives the system information on the WUR link, optionally, the UE may receive the system information in a first system information modification period on the WUR link. The first system information modification period is, for example, a next system information modification period of a system information modification period in which the UE is currently located on the WUR link. A system information modification period on the WUR link may be referred to as an MP, or may have another name. The system information modification period on the WUR link may be synchronized with or may not be synchronized with the MP on the NR link. For example, the UE may maintain the correspondence (for example, the first correspondence) between the time on the WUR link and the time on the NR link, and the UE may determine the time on the NR link. In this case, the UE can determine the time on the WUR link based on the first correspondence and the time on the NR link, to determine a time domain location of a next system information modification period on the WUR link. Alternatively, for example, the access network device may send, on the WUR link, information used to indicate a time domain location of the first system information modification period. The information indicates, for example, a start time domain location of the first system information modification period on the WUR link. Therefore, the UE can determine the time domain location of the first system information modification period on the WUR link.

In S307, if the UE receives the first indication information, the UE may receive the system information, that is, perform S306. When receiving the system information, the UE may receive all the system information or may receive some required system information (for example, receive the system information related to establishing or restoring the connection on the NR link). If the UE receives the second indication information, the UE may receive the system information, that is, perform S306. When receiving the system information, the UE may receive only the system information related to establishing or restoring the connection on the NR link, but not receive other system information (for example, the system information unrelated to establishing or restoring the connection on the NR link), to reduce power consumption caused by signaling reception by the UE. Alternatively, when receiving the system information, the UE may also receive other system information (for example, the system information unrelated to establishing or restoring the connection on the NR link) in addition to the system information related to establishing or restoring the connection on the NR link, to improve implementation flexibility of the UE. If the UE receives the third indication information, the UE may receive the system information, that is, perform S306. When receiving the system information, the UE may receive only the system information related to the WUR link, but not receive other system information (for example, the system information unrelated to the WUR link), to reduce power consumption caused by signaling reception by the UE. Alternatively, when receiving the system information, the UE may also receive other system information (for example, the system information unrelated to the WUR link) in addition to the system information related to the WUR link, to improve implementation flexibility of the UE.

If the UE receives the fourth indication information, the UE may receive the system information. For example, the UE receives only the system information unrelated to establishing or restoring the connection on the NR link, but not receive other system information (for example, the system information related to establishing or restoring the connection on the NR link), to reduce power consumption caused by signaling reception by the UE; or the UE may also receive other system information (for example, the system information related to establishing or restoring the connection on the NR link) in addition to the system information unrelated to establishing or restoring the connection on the NR link, to improve implementation flexibility of the UE. Alternatively, if the fourth indication information is received, the UE may not receive the system information first, that is, perform S308 instead of performing S306. For example, the UE may obtain changed system information in a process of establishing or restoring the connection on the NR link, or after establishing or restoring the connection on the NR link, to reduce the access delay of the UE.

If the UE receives the fifth indication information, the UE may receive the system information. For example, the UE receives only the system information unrelated to the WUR link, but not receive other system information (for example, the system information related to the WUR link), to reduce power consumption caused by signaling reception by the UE; or the UE may also receive other system information (for example, the system information related to the WUR link) in addition to the system information unrelated to the WUR link, to improve implementation flexibility of the UE. Alternatively, if the fifth indication information is received, the UE may not receive the system information first, that is, perform S308 instead of performing S306. For example, the UE may obtain changed system information in a process of establishing or restoring the connection on the NR link, or after establishing or restoring the connection on the NR link, to reduce the access delay of the UE.

S308: The UE establishes or restores the connection on the NR link. For example, the UE initiates a random access procedure to the access network device on the NR link, to access the network.

S308 may be performed after S306 is performed. Alternatively, after S305 is performed, S308 may be performed if the UE determines that the system information is not changed. Alternatively, after S307 is performed, S308 may be performed if the UE needs to access the network. Alternatively, regardless of which of the foregoing steps is performed, the UE may not establish or restore the connection on the NR link, that is, S308 is not performed. Therefore, S308 is an optional step.

According to this embodiment of this application, the first system information change indication may be transmitted on the WUR link, and/or a change status of the cell may be indicated on the WUR link. In this case, if the UE receives the first system information change indication, and/or determines that the cell is changed, the UE may determine that the system information is changed. To be specific, the UE may receive the system information when determining that the system information is changed. If the UE determines that the system information is not changed (for example, the UE fails to receive the first system information change indication on the WUR link, and determines that the cell is not changed), the UE may not need to receive the system information. For example, the UE may directly establish or restore the connection on the NR link when the UE does not need to receive the system information. It can be learned that, in this manner, a delay of accessing the network by the UE can be reduced. Because the UE does not need to receive the system information, power consumption of the UE can be reduced.

FIG. 5 is a schematic diagram of a structure of a communication apparatus according to an embodiment of this application. The communication apparatus 500 may be the terminal device in the embodiment shown in FIG. 3 or a circuit system of the terminal device, and is configured to implement the method corresponding to the terminal device in the foregoing method embodiment. For a specific function, refer to the description in the foregoing method embodiment. For example, a circuit system is a chip system.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent components, and may be located in different physical locations, or may be located on different integrated circuits. Optionally, different processors may be integrated into one or more processors, for example, integrated into one or more integrated circuits.

Optionally, the communication apparatus 500 includes one or more memories 503, configured to store instructions. Optionally, the memory 503 may further store data. The processor and the memory may be separately disposed, or may be integrated together.

Optionally, the communication apparatus 500 includes a communication line 502 and at least one communication interface 504. Because the memory 503, the communication line 502, and the communication interface 504 are all optional, they are all indicated by dashed lines in FIG. 5.

Optionally, the communication apparatus 500 may further include a transceiver and/or an antenna. The transceiver may be configured to send information to another apparatus or receive information from another apparatus. The transceiver may be referred to as a transceiver, a transceiver circuit, an input/output interface, or the like, and is configured to implement a transceiver function of the communication apparatus 500 through the antenna. Optionally, the transceiver includes a transmitter (transmitter) and a receiver (receiver). For example, the transmitter may be configured to generate a radio frequency (radio frequency) signal from a baseband signal, and the receiver may be configured to convert the radio frequency signal into the baseband signal.

The processor 501 may include a general-purpose central processing unit (central processing unit, CPU), a microprocessor, an application-specific integrated circuit (application-specific integrated circuit, ASIC), or one or more integrated circuits configured to control program execution of the solutions in this application.

The communication line 502 may include a path for transmitting information between the foregoing components.

The communication interface 504 uses any apparatus like a transceiver, and is configured to communicate with another device or a communication network, such as the Ethernet, a radio access network (radio access network, RAN), a wireless local area network (wireless local area network, WLAN), or a wired access network.

The memory 503 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of instructions or a data structure and that can be accessed by a computer. However, this is not limited thereto. The memory 503 may exist independently, and is connected to the processor 501 through the communication line 502. Alternatively, the memory 503 may be integrated with the processor 501.

The memory 503 is configured to store computer-executable instructions for executing the solutions of this application, and the processor 501 controls execution of the computer-executable instructions. The processor 501 is configured to execute the computer-executable instructions stored in the memory 503, to implement the communication method provided in the foregoing embodiment of this application.

Optionally, the computer-executable instructions in this embodiment of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 508 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 5 is a chip, for example, a chip of an access network device, a chip of a UPF, a chip of an SMF, or a chip of a terminal device, the chip includes the processor 501 (which may further include the processor 508), the communication line 502, the memory 503, and the communication interface 504. Specifically, the communication interface 504 may be an input interface, a pin, a circuit, or the like. The memory 503 may be a register, a cache, or the like. The processor 501 and the processor 508 may be a general-purpose CPU, a microprocessor, an ASIC, or one or more integrated circuits configured to control program execution of the communication method in any one of the foregoing embodiments.

In a first implementation, the communication apparatus 500 may be configured to implement the method corresponding to the terminal device in the foregoing embodiment of this application. For a specific function, refer to the description in the foregoing embodiment.

For example, the communication apparatus 500 includes the processor 501. The processor 501 is configured to execute a computer program or instructions, so that the method corresponding to the terminal device in the foregoing embodiment of this application is performed. For example, the method corresponding to the terminal device in the foregoing embodiment of this application includes: receiving a first system information change indication on a WUR link, and/or determining, on the WUR link, that a cell is changed, where the first system information change indication indicates that system information is changed; and receiving the system information on an NR link if the system information is changed, before establishing or restoring a connection on the NR link.

For another example, the method corresponding to the terminal device in the foregoing embodiment of this application includes: receiving a first system information change indication on a WUR link, and/or determining, on the WUR link, that a cell is changed, where the first system information change indication indicates that system information is changed; and receiving the system information.

For still another example, the method corresponding to the terminal device in the foregoing embodiment of this application includes: receiving a first system information change indication on a WUR link, and/or determining, on the WUR link, that a cell is changed, where the first system information change indication indicates that system information is changed; and receiving the system information on a receiving occasion on an NR link.

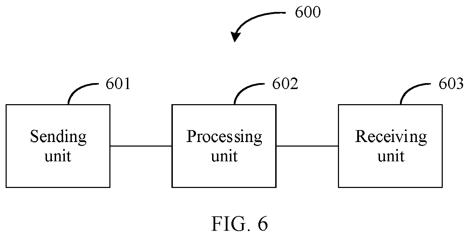

In embodiments of this application, the apparatus may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software function module. It should be noted that, in embodiments of this application, module division is an example, and is merely a logical function division. During actual implementation, another division manner may be used. For example, when each functional module is obtained through division based on each corresponding function, FIG. 6 is a schematic diagram of an apparatus. The apparatus 600 may be the terminal device in the foregoing method embodiment, or may be a chip in the terminal device. The apparatus 600 includes a sending unit 601, a processing unit 602, and a receiving unit 603.

It should be understood that the apparatus 600 may be configured to implement a step performed by the terminal device in the methods in embodiments of this application. For related features, refer to the foregoing embodiments. Details are not described herein again.

Optionally, functions/implementation processes of the sending unit 601, the receiving unit 603, and the processing unit 602 in FIG. 6 may be implemented by the processor 501 in FIG. 5 by invoking the computer-executable instructions stored in the memory 503. Alternatively, a function/an implementation process of the processing unit 602 in FIG. 6 may be implemented by the processor 501 in FIG. 5 by invoking the computer-executable instructions stored in the memory 503; and functions/implementation processes of the sending unit 601 and the receiving unit 603 in FIG. 6 may be implemented through the communication interface 504 in FIG. 5.

Optionally, when the apparatus 600 is a chip or a circuit, functions/implementation processes of the sending unit 601 and the receiving unit 603 may alternatively be implemented through the pin, the circuit, or the like.

All or some of the foregoing embodiments may be implemented through software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logical units and circuits described in embodiments of this application may implement or operate the described function via a general-purpose processor, a digital signal processor (digital signal processor, DSP), an application-specific integrated circuit (application-specific integrated circuit, ASIC), a field-programmable gate array (field-programmable gate array, FPGA) or another programmable logic devices, a discrete gate or transistor logic, a discrete hardware component, or a design of any combination of the foregoing. The general-purpose processor may be a microprocessor. Optionally, the general-purpose processor may alternatively be any conventional processor, controller, microcontroller, or state machine. The processor may also be implemented by a combination of computing apparatuses, such as a combination of a digital signal processor and a microprocessor, a plurality of microprocessors, one or more microprocessors and one digital signal processor, or any other similar configurations.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or a storage medium of any other form in this field. For example, the storage medium may connect to a processor, so that the processor can read information from the storage medium and write information into the storage medium. Alternatively, the storage medium may be integrated into the processor. The processor and the storage medium may be disposed in an ASIC, and the ASIC may be disposed in a terminal device. Optionally, the processor and the storage medium may alternatively be disposed in different components in the terminal device.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to have covered any or all of modifications, variations, combinations, or equivalents within the scope of embodiments of this application. Clearly, a person skilled in the art may make various modifications and variations to embodiments of this application without departing from the scope of embodiments of this application. In this way, embodiments of this application are also intended to cover these modifications and variations of embodiments of this application provided that they fall within the scope of the claims of embodiments of this application and equivalent technologies thereof.

Embodiment 1: A communication method, applied to a terminal device, where the method includes:
receiving a first system information change indication on a WUR link, and/or determining, on the WUR link, that a cell is changed, where the first system information change indication indicates that system information is changed; and
receiving the system information on an NR link if the system information is changed, before establishing or restoring a connection on the NR link.

Embodiment 2: The method according to Embodiment 1, where the receiving the system information on an NR link if the system information is changed, before establishing or restoring a connection on the NR link includes:
receiving the system information on the NR link if the system information is changed, after receiving a message used to page the terminal device; or
receiving the system information on the NR link if the system information is changed, after determining that communication on the NR link needs to be initiated.

Embodiment 3: The method according to Embodiment 1 or 2, where that the first system information change indication indicates that system information is changed includes one or more of the following:
the first system information change indication includes first indication information, and the first indication information indicates that the system information is changed;
the first system information change indication includes second indication information, and the second indication information indicates that system information related to establishing or restoring the connection on the NR link is changed;
the first system information change indication includes third indication information, and the third indication information indicates that system information related to the WUR link is changed;
the first system information change indication includes fourth indication information, and the fourth indication information indicates that system information unrelated to establishing or restoring the connection on the NR link is changed; or
the first system information change indication includes fifth indication information, and the fifth indication information indicates that system information unrelated to the WUR link is changed.

Embodiment 4: The method according to any one of Embodiments 1 to 3, where before the receiving the system information on the NR link, the method further includes: switching from the WUR link to the NR link.

Embodiment 5: The method according to any one of Embodiments 1 to 4, where
after the receiving a first system information change indication on a WUR link, and/or determining, on the WUR link, that a cell is changed, the method further includes: setting a value of a first variable to a first value, where the first value indicates that system information change has occurred; and
determining that the system information is changed includes: determining, based on the value of the first variable, that the system information change has occurred.

Embodiment 6: The method according to any one of Embodiments 1 to 5, where the method further includes:
entering a new cell through cell reselection; and
setting the value of the first variable to a second value, where the second value indicates that the system information change has not occurred.

Embodiment 7: The method according to any one of Embodiments 1 to 6, where the first system information change indication indicates that first-type system information is changed.

Embodiment 8: A communication method, applied to a terminal device, where the method includes:
receiving a first system information change indication on a WUR link, and/or determining, on the WUR link, that a cell is changed, where the first system information change indication indicates that system information is changed; and
receiving the system information.

Embodiment 9: The method according to Embodiment 8, where that the first system information change indication indicates that system information is changed includes one or more of the following:
the first system information change indication includes first indication information, and the first indication information indicates that the system information is changed;
the first system information change indication includes second indication information, and the second indication information indicates that system information related to establishing or restoring a connection on an NR link is changed;
the first system information change indication includes third indication information, and the third indication information indicates that system information related to the WUR link is changed;
the first system information change indication includes fourth indication information, and the fourth indication information indicates that system information unrelated to establishing or restoring a connection on an NR link is changed; or
the first system information change indication includes fifth indication information, and the fifth indication information indicates that system information unrelated to the WUR link is changed.

Embodiment 10: The method according to Embodiment 8 or 9, where the receiving the system information includes:
switching to the NR link, and receiving the system information on the NR link; or
receiving the system information on the WUR link.

Embodiment 11: The method according to Embodiment 10, where the receiving the system information on the NR link includes:
receiving the system information on a receiving occasion on the NR link.

Embodiment 12: The method according to Embodiment 11, where
a start time domain location of the receiving occasion is a location at which first duration after the first system information change indication is received expires;
the receiving occasion is in a current system information modification period and a next system information modification period on the NR link;
the receiving occasion is in a first system information modification period on the NR link, and a time domain location of the first system information modification period is determined based on time indication information received on the WUR link; or
the receiving occasion is in a first system information modification period, the first system information modification period is determined based on a first correspondence, and the first correspondence is a correspondence between time information on the WUR link and time information on the NR link.

Embodiment 13: The method according to any one of Embodiments 8 to 12, where the method further includes:
setting a value of a first variable to a second value, where the second value indicates that system information change has not occurred.

Embodiment 14: The method according to any one of Embodiments 8 to 13, where the method further includes:
entering a new cell through cell reselection; and
setting the value of the first variable to the second value, where the second value indicates that the system information change has not occurred.

Embodiment 15: The method according to any one of Embodiments 8 to 14, where the method further includes:
before establishing or restoring the connection on the NR link, determining, based on the value of the first variable, that the system information change has occurred; and
receiving the system information on the NR link.

Embodiment 16: The method according to any one of Embodiments 8 to 15, where the first system information change indication indicates that first-type system information is changed.

Embodiment 17: A communication method, applied to a terminal device, where the method includes:
receiving a first system information change indication on a WUR link, and/or determining, on the WUR link, that a cell is changed, where the first system information change indication indicates that system information is changed; and
receiving the system information on a receiving occasion on an NR link.

Embodiment 18: The method according to Embodiment 17, where
a start time domain location of the receiving occasion is a location at which first duration after the first system information change indication is received expires;
the receiving occasion is in a current system information modification period and a next system information modification period on the NR link;
the receiving occasion is in a first system information modification period on the NR link, and a time domain location of the first system information modification period is determined based on time indication information received on the WUR link; or
the receiving occasion is in a first system information modification period, the first system information modification period is determined based on a first correspondence, and the first correspondence is a correspondence between time information on the WUR link and time information on the NR link.

Embodiment 19: The method according to Embodiment 17 or 18, where that the first system information change indication indicates that first-type system information is changed includes one or more of the following:
the first system information change indication includes first indication information, and the first indication information indicates that the system information is changed;
the first system information change indication includes second indication information, and the second indication information indicates that system information related to network access is changed;
the first system information change indication includes third indication information, and the third indication information indicates that system information related to the WUR link is changed;
the first system information change indication includes fourth indication information, and the fourth indication information indicates that system information unrelated to establishing or restoring a connection on the NR link is changed; or
the first system information change indication includes fifth indication information, and the fifth indication information indicates that system information unrelated to the WUR link is changed.

Embodiment 20: The method according to any one of Embodiments 17 to 19, where after the receiving the system information on a receiving occasion on an NR link, the method further includes:
setting a value of a first variable to a second value, where the second value indicates that system information change has not occurred.

Embodiment 21: The method according to any one of Embodiments 17 to 20, where the method further includes:
entering a new cell through cell reselection; and
setting the value of the first variable to the second value, where the second value indicates that the system information change has not occurred.

Embodiment 22: The method according to any one of Embodiments 17 to 21, where the method further includes:
before establishing or restoring the connection on the NR link, determining, based on the value of the first variable, that the system information change has occurred; and
receiving the system information on the NR link.

Embodiment 23: The method according to any one of Embodiments 17 to 22, where the first system information change indication indicates that first-type system information is changed.

Embodiment 24: A communication apparatus, including:
a transceiver unit, configured to receive a first system information change indication on a WUR link; and/or a processing unit, configured to determine, on the WUR link, that a cell is changed, where the first system information change indication indicates that system information is changed, and
the processing unit is further configured to: before a connection on an NR link is established or restored, receive the system information on the NR link through the transceiver unit if the system information is changed.

Embodiment 25: The communication apparatus according to Embodiment 24, where the processing unit is configured to: before the connection on the NR link is established or restored, receive the system information on the NR link through the transceiver unit if the system information is changed, in the following manner:
after receiving, through the transceiver unit, a message used to page the communication apparatus, receive the system information on the NR link through the transceiver unit if the system information is changed; or
after determining that communication on the NR link needs to be initiated, receive the system information on the NR link through the transceiver unit if the system information is changed.

Embodiment 26: The communication apparatus according to Embodiment 24 or 25, where that the first system information change indication indicates that system information is changed includes one or more of the following:
the first system information change indication includes first indication information, and the first indication information indicates that the system information is changed;
the first system information change indication includes second indication information, and the second indication information indicates that system information related to establishing or restoring the connection on the NR link is changed;
the first system information change indication includes third indication information, and the third indication information indicates that system information related to the WUR link is changed;
the first system information change indication includes fourth indication information, and the fourth indication information indicates that system information unrelated to establishing or restoring the connection on the NR link is changed; or
the first system information change indication includes fifth indication information, and the fifth indication information indicates that system information unrelated to the WUR link is changed.

Embodiment 27: The communication apparatus according to any one of Embodiments 24 to 26, where the processing unit is further configured to: before the transceiver unit receives the system information on the NR link, switch from the WUR link to the NR link.

Embodiment 28: The communication apparatus according to any one of Embodiments 24 to 27, where
the processing unit is further configured to set a value of a first variable to a first value after the transceiver unit receives the first system information change indication on the WUR link, and/or determining, on the WUR link, that the cell is changed, where the first value indicates that system information change has occurred; and
the processing unit is configured to determine, in the following manner, that the system information is changed: determining, based on the value of the first variable, that the system information change has occurred.

Embodiment 29: The communication apparatus according to any one of Embodiments 24 to 28, where the processing unit is further configured to:
enter a new cell through cell reselection; and
set the value of the first variable to a second value, where the second value indicates that the system information change has not occurred.

Embodiment 30: The communication apparatus according to any one of Embodiments 24 to 29, where the first system information change indication indicates that first-type system information is changed.

Embodiment 31: A communication apparatus, including:
a transceiver unit, configured to receive a first system information change indication on a WUR link; and/or a processing unit, configured to determine, on the WUR link, that a cell is changed, where the first system information change indication indicates that system information is changed, and
the transceiver unit is further configured to receive the system information.

Embodiment 32: The communication apparatus according to Embodiment 31, where that the first system information change indication indicates that system information is changed includes one or more of the following:
the first system information change indication includes first indication information, and the first indication information indicates that the system information is changed;
the first system information change indication includes second indication information, and the second indication information indicates that system information related to establishing or restoring a connection on an NR link is changed;
the first system information change indication includes third indication information, and the third indication information indicates that system information related to the WUR link is changed;
the first system information change indication includes fourth indication information, and the fourth indication information indicates that system information unrelated to establishing or restoring a connection on an NR link is changed; or
the first system information change indication includes fifth indication information, and the fifth indication information indicates that system information unrelated to the WUR link is changed.

Embodiment 33: The communication apparatus according to Embodiment 31 or 32, where the transceiver unit is configured to receive the system information in the following manner:
switching to the NR link, and receiving the system information on the NR link; or
receiving the system information on the WUR link.

Embodiment 34: The communication apparatus according to Embodiment 33, where the transceiver unit is configured to receive the system information on the NR link in the following manner:
receiving the system information on a receiving occasion on the NR link.

Embodiment 35: The method according to Embodiment 34, where
a start time domain location of the receiving occasion is a location at which first duration after the first system information change indication is received expires;
the receiving occasion is in a current system information modification period and a next system information modification period on the NR link;
the receiving occasion is in a first system information modification period on the NR link, and a time domain location of the first system information modification period is determined based on time indication information received on the WUR link; or
the receiving occasion is in a first system information modification period, the first system information modification period is determined based on a first correspondence, and the first correspondence is a correspondence between time information on the WUR link and time information on the NR link.

Embodiment 36: The communication apparatus according to any one of Embodiments 31 to 35, where the processing unit is further configured to set a value of a first variable to a second value, where the second value indicates that system information change has not occurred.

Embodiment 37: The communication apparatus according to any one of Embodiments 31 to 36, where the processing unit is further configured to:
enter a new cell through cell reselection; and
set the value of the first variable to the second value, where the second value indicates that the system information change has not occurred.

Embodiment 38: The communication apparatus according to any one of Embodiments 31 to 37, where
the processing unit is further configured to: before establishing or restoring the connection on the NR link, determine, based on the value of the first variable, that the system information change has occurred; and
the transceiver unit is further configured to receive the system information on the NR link.

Embodiment 39: The communication apparatus according to any one of Embodiments 31 to 38, where the first system information change indication indicates that first-type system information is changed.

Embodiment 40: A communication apparatus, including:
a transceiver unit, configured to receive a first system information change indication on a WUR link; and/or a processing unit, configured to determine, on the WUR link, that a cell is changed, where the first system information change indication indicates that system information is changed, and
the transceiver unit is further configured to receive the system information on a receiving occasion on an NR link.

Embodiment 41: The communication apparatus according to Embodiment 40, where
a start time domain location of the receiving occasion is a location at which first duration after the first system information change indication is received expires;
the receiving occasion is in a current system information modification period and a next system information modification period on the NR link;
the receiving occasion is in a first system information modification period on the NR link, and a time domain location of the first system information modification period is determined based on time indication information received on the WUR link; or
the receiving occasion is in a first system information modification period, the first system information modification period is determined based on a first correspondence, and the first correspondence is a correspondence between time information on the WUR link and time information on the NR link.

Embodiment 42: The communication apparatus according to Embodiment 40 or 41, where that the first system information change indication indicates that first-type system information is changed includes one or more of the following:
the first system information change indication includes first indication information, and the first indication information indicates that the system information is changed;
the first system information change indication includes second indication information, and the second indication information indicates that system information related to network access is changed;
the first system information change indication includes third indication information, and the third indication information indicates that system information related to the WUR link is changed;
the first system information change indication includes fourth indication information, and the fourth indication information indicates that system information unrelated to establishing or restoring a connection on the NR link is changed; or
the first system information change indication includes fifth indication information, and the fifth indication information indicates that system information unrelated to the WUR link is changed.

Embodiment 43: The communication apparatus according to any one of Embodiments 40 to 42, where the processing unit is further configured to: after the transceiver unit receives the system information on the receiving occasion on the NR link, set a value of a first variable to a second value, where the second value indicates that system information change has not occurred.

Embodiment 44: The communication apparatus according to any one of Embodiments 40 to 43, where the processing unit is further configured to:
enter a new cell through cell reselection; and
set the value of the first variable to the second value, where the second value indicates that the system information change has not occurred.

Embodiment 45: The communication apparatus according to any one of Embodiments 40 to 44, where
the processing unit is further configured to: before establishing or restoring the connection on the NR link, determine, based on the value of the first variable, that the system information change has occurred; and
the transceiver unit is further configured to receive the system information on the NR link.

Embodiment 46: The communication apparatus according to any one of Embodiments 40 to 45, where the first system information change indication indicates that first-type system information is changed.

Embodiment 47: An apparatus, including a unit configured to perform the method according to any one of embodiments of this application.

Embodiment 48: A computer program product, where the computer program product includes a computer program, and when the computer program is run on a computer, the computer is enabled to perform the method according to any one of Embodiments 1 to 7, the computer is enabled to perform the method according to any one of Embodiments 8 to 16, or the computer is enabled to perform the method according to any one of Embodiments 17 to 23.

## Claims

1. A communication method, applied to a terminal device, wherein the method comprises:
receiving a first system information change indication on a wake-up circuit WUR link, and/or determining, on the WUR link, that a cell is changed, wherein the first system information change indication indicates that system information is changed; and
receiving the system information on a new radio NR link if the system information is changed, before establishing or restoring a connection on the NR link.

2. The method according to claim 1, wherein the receiving the system information on an NR link if the system information is changed, before establishing or restoring a connection on the NR link comprises:
receiving the system information on the NR link if the system information is changed, after receiving a message used to page the terminal device; or
receiving the system information on the NR link if the system information is changed, after determining that communication on the NR link needs to be initiated.

3. The method according to claim 1 or 2, wherein that the first system information change indication indicates that system information is changed comprises one or more of the following:
the first system information change indication comprises first indication information, and the first indication information indicates that the system information is changed;
the first system information change indication comprises second indication information, and the second indication information indicates that system information related to establishing or restoring the connection on the NR link is changed;
the first system information change indication comprises third indication information, and the third indication information indicates that system information related to the WUR link is changed;
the first system information change indication comprises fourth indication information, and the fourth indication information indicates that system information unrelated to establishing or restoring the connection on the NR link is changed; or
the first system information change indication comprises fifth indication information, and the fifth indication information indicates that system information unrelated to the WUR link is changed.

4. The method according to any one of claims 1 to 3, wherein before the receiving the system information on the NR link, the method further comprises:
switching from the WUR link to the NR link.

5. The method according to any one of claims 1 to 4, wherein
after the receiving a first system information change indication on a WUR link, and/or determining, on the WUR link, that a cell is changed, the method further comprises: setting a value of a first variable to a first value, wherein the first value indicates that system information change has occurred; and
determining that the system information is changed comprises: determining, based on the value of the first variable, that the system information change has occurred.

6. The method according to any one of claims 1 to 5, wherein the method further comprises:
entering a new cell through cell reselection; and
setting the value of the first variable to a second value, wherein the second value indicates that the system information change has not occurred.

7. The method according to any one of claims 1 to 6, wherein the first system information change indication indicates that first-type system information is changed.

8. A communication method, applied to a terminal device, wherein the method comprises:
receiving a first system information change indication on a WUR link, and/or determining, on the WUR link, that a cell is changed, wherein the first system information change indication indicates that system information is changed; and
receiving the system information.

9. The method according to claim 8, wherein that the first system information change indication indicates that system information is changed comprises one or more of the following:
the first system information change indication comprises first indication information, and the first indication information indicates that the system information is changed;
the first system information change indication comprises second indication information, and the second indication information indicates that system information related to establishing or restoring a connection on an NR link is changed;
the first system information change indication comprises third indication information, and the third indication information indicates that system information related to the WUR link is changed;
the first system information change indication comprises fourth indication information, and the fourth indication information indicates that system information unrelated to establishing or restoring a connection on an NR link is changed; or
the first system information change indication comprises fifth indication information, and the fifth indication information indicates that system information unrelated to the WUR link is changed.

10. The method according to claim 8 or 9, wherein the receiving the system information comprises:
switching to the NR link, and receiving the system information on the NR link; or
receiving the system information on the WUR link.

11. The method according to claim 10, wherein the receiving the system information on the NR link comprises:
receiving the system information on a receiving occasion on the NR link.

12. The method according to claim 11, wherein
a start time domain location of the receiving occasion is a location at which first duration after the first system information change indication is received expires;
the receiving occasion is in a current system information modification period and a next system information modification period on the NR link;
the receiving occasion is in a first system information modification period on the NR link, and a time domain location of the first system information modification period is determined based on time indication information received on the WUR link; or
the receiving occasion is in a first system information modification period, the first system information modification period is determined based on a first correspondence, and the first correspondence is a correspondence between time information on the WUR link and time information on the NR link.

13. The method according to any one of claims 8 to 12, wherein the method further comprises:
setting a value of a first variable to a second value, wherein the second value indicates that system information change has not occurred.

14. The method according to any one of claims 8 to 13, wherein the method further comprises:
entering a new cell through cell reselection; and
setting the value of the first variable to the second value, wherein the second value indicates that the system information change has not occurred.

15. The method according to any one of claims 8 to 14, wherein the method further comprises:
before establishing or restoring the connection on the NR link, determining, based on the value of the first variable, that the system information change has occurred; and
receiving the system information on the NR link.

16. The method according to any one of claims 8 to 15, wherein the first system information change indication indicates that first-type system information is changed.

17. A communication method, applied to a terminal device, wherein the method comprises:
receiving a first system information change indication on a WUR link, and/or determining, on the WUR link, that a cell is changed, wherein the first system information change indication indicates that system information is changed; and
receiving the system information on a receiving occasion on an NR link.

18. The method according to claim 17, wherein
a start time domain location of the receiving occasion is a location at which first duration after the first system information change indication is received expires;
the receiving occasion is in a current system information modification period and a next system information modification period on the NR link;
the receiving occasion is in a first system information modification period on the NR link, and a time domain location of the first system information modification period is determined based on time indication information received on the WUR link; or
the receiving occasion is in a first system information modification period, the first system information modification period is determined based on a first correspondence, and the first correspondence is a correspondence between time information on the WUR link and time information on the NR link.

19. The method according to claim 17 or 18, wherein that the first system information change indication indicates that first-type system information is changed comprises one or more of the following:
the first system information change indication comprises first indication information, and the first indication information indicates that the system information is changed;
the first system information change indication comprises second indication information, and the second indication information indicates that system information related to network access is changed;
the first system information change indication comprises third indication information, and the third indication information indicates that system information related to the WUR link is changed;
the first system information change indication comprises fourth indication information, and the fourth indication information indicates that system information unrelated to establishing or restoring a connection on the NR link is changed; or
the first system information change indication comprises fifth indication information, and the fifth indication information indicates that system information unrelated to the WUR link is changed.

20. The method according to any one of claims 17 to 19, wherein after the receiving the system information on a receiving occasion on an NR link, the method further comprises:
setting a value of a first variable to a second value, wherein the second value indicates that system information change has not occurred.

21. The method according to any one of claims 17 to 20, wherein the method further comprises:
entering a new cell through cell reselection; and
setting the value of the first variable to the second value, wherein the second value indicates that the system information change has not occurred.

22. The method according to any one of claims 17 to 21, wherein the method further comprises:
before establishing or restoring the connection on the NR link, determining, based on the value of the first variable, that the system information change has occurred; and
receiving the system information on the NR link.

23. The method according to any one of claims 17 to 22, wherein the first system information change indication indicates that first-type system information is changed.

24. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device performs the method according to any one of claims 1 to 7, the communication device performs the method according to any one of claims 8 to 16, or the communication device performs the method according to any one of claims 17 to 23.

25. A computer-readable storage medium, wherein the computer-readable storage medium is configured to store a computer program, and when the computer program is run on a computer, the computer is enabled to perform the method according to any one of claims 1 to 7, the computer is enabled to perform the method according to any one of claims 8 to 16, or the computer is enabled to perform the method according to any one of claims 17 to 23.

26. A chip, comprising one or more processors and a communication interface, wherein the one or more processors are configured to read instructions, to perform the method according to any one of claims 1 to 7, perform the method according to any one of claims 8 to 16, or perform the method according to any one of claims 17 to 23.
